# EUROPEAN PATENT SPECIFICATION

(11) **EP 3 239 028 B1**
(45) Date of publication and mention of the grant of the patent: **17.02.2021**
(21) Application number: 17160074.5
(22) Date of filing: 09.03.2017
(51) Int. Cl.: B62M 6/90, B62M 6/55, B62K 19/34, B62K 25/28, B62K 25/30, B62M 11/02

(54) **ELECTRIC-MOTOR-ASSISTED BICYCLE**
ELEKTROMOTORUNTERSTÜTZTES FAHRRAD
BICYCLETTE ASSISTÉE PAR MOTEUR ÉLECTRIQUE

(30) Priority: 28.04.2016 JP 2016091467
(43) Date of publication of application: 01.11.2017
(73) Proprietor: Yamaha Hatsudoki Kabushiki Kaisha, Iwata-shi, Shizuoka 438-8501 (JP)
(72) Inventor: Mano, Yasunori, Shizuoka, 438-8501 (JP)
(74) Representative: Grünecker Patent- und Rechtsanwälte PartG mbB

(56) References cited:
- EP-A1- 2 409 908
- EP-A1- 2 759 464
- EP-A1- 2 783 972
- EP-A1- 2 957 495
- EP-A1- 3 323 703
- WO-A1-2013/050193
- DE-A1-102013 107 623
- JP-A- H08 244 673
- JP-A- 2014 196 080
- US-A- 5 826 675
- US-A- 6 073 717

## Description

The present invention relates to electric-motor-assisted bicycles, and more particularly to electric-motor-assisted bicycles including a drive unit attached to the vehicle-body frame. Prior art document DE 10 2013 107 623 A1 illustrates an electric-motor-assisted bicycle with a front wheel and a rear wheel. A vehicle-body frame is supporting the front and rear wheels, and a drive unit is attached to the vehicle-body frame for generating a driving force to be transmitted to the rear wheel. The drive unit includes a housing with attachment portions for attaching the housing to the vehicle-body frame. The vehicle-body frame includes a bracket, the drive unit being attached to the bracket, and at least one chain stay is attached to the bracket at a position rearward of a crank axle as measured in a front/rear direction with respect to the bicycle, and extending from the bracket rearwardly with respect to the bicycle for supporting an axle of the rear wheel. A first attachment portion is located forward of the crank axle as measured in the front/rear direction with respect to the bicycle and a second attachment portion is located rearward of the crank axle as measured in the front/rear direction with respect to the bicycle. At least one of a region in the bracket to which the chain stay is attached and a region in the bracket to which the second attachment portion is attached does not overlap a line segment connecting a shaft center of the axle of the rear wheel to a shaft center of the crank axle as viewed from a side of the bicycle. A saddle located higher than the drive unit and supported by a seatpost. A seat tube is attached to the bracket. The seat tube extends from the bracket upwardly with respect to the bicycle. The seatpost is inserted into the seat tube. The first attachment portion is located forward of a position on the bracket to which the seat tube is attached as measured in a direction in which the bracket extends as viewed from a side of the bicycle. The second attachment portion is located rearward of the position on the bracket to which the seat tube is attached as measured in the direction in which the bracket extends as viewed from a side of the bicycle. The region in the bracket to which the chain stay is attached is different in position from the region in the bracket to which the second attachment portion is attached as measured in the direction in which the bracket extends as viewed from a side of the bicycle. Prior art document US 6,073,717 A discloses an electric motor assisted vehicle such as bicycle having a drive unit and a control mounted as a unit so as to minimize external wiring and to facilitate heat transfer from the control unit to the atmosphere while protecting the control unit. Sensors for the control unit are also mounted on the outer housing and cooperate with the internal components of the outer housing so as to provide the necessary signals for control.

Bicycles are used by many people, regardless of age and gender, as a handy transportation means. In recent years, electric-motor-assisted bicycles have become popular that add driving forces from the motor to pedaling forces from the rider to assist the rider. Such an electric-motor-assisted bicycle is disclosed in JP 2014-196080 A, for example.

The above publication describes an electric-motor-assisted bicycle that includes a drive unit. The drive unit includes a crank axle. Pedals are mounted on the crank axle by means of arms. The drive unit is attached to the bottom of the vehicle-body frame.

The drive unit is a component that was not present in conventional bicycles. Consequently, in the context of bicycles where importance is given to travelling performance, such as racing bicycles, the drive unit may present an obstacle and decrease travelling performance. More specifically, the distance between the shaft center of the crank axle and the shaft center of the axle of the rear wheel as viewed from a side of the vehicle (hereinafter referred to as rear/center length) may increase.

An object of the present invention is to provide an electric-motor-assisted bicycle capable of minimizing the increase of the rear/center length in an electric-motor-assisted bicycle including a drive unit attached to the vehicle-body frame.

According to the present invention said object is solved by an electric-motor-assisted bicycle having the features of independent claim 1. Preferred embodiments are laid down in the dependent claims.

The electric-motor-assisted bicycle in an embodiment includes a front wheel, a rear wheel, a vehicle-body frame, and a drive unit. The rear wheel is located rearward of the front wheel. The vehicle-body frame supports the front and rear wheels. The drive unit is attached to the vehicle-body frame. The drive unit generates a driving force to be transmitted to the rear wheel. The drive unit includes a housing, two attachment portions and a crank axle. The two attachment portions are provided on an outer surface of the housing. The two attachment portions are used to attach the housing to the vehicle-body frame. The two attachment portions being a first attachment portion and a second attachment portion. The crank axle extends through the housing in a left/right direction with respect to the bicycle. The vehicle-body frame includes a bracket and a chain stay. The drive unit is attached to the bracket. The chain stay is attached to the bracket at a position rearward of the crank axle as measured in a front/rear direction with respect to the bicycle. The chain stay extends from the bracket rearwardly with respect to the bicycle for supporting an axle of the rear wheel. The first attachment portion is located forward of the crank axle as measured in the front/rear direction with respect to the bicycle. The second attachment portion is located rearward of the crank axle as measured in the front/rear direction with respect to the bicycle. At least one of a region in the bracket to which the chain stay is attached and a region in the bracket to which the second attachment portion is attached does not overlap a line segment connecting a shaft center of the axle of the rear wheel to a shaft center of the crank axle as viewed from a side of the bicycle.

The above electric-motor-assisted bicycle minimizes the increase of the rear/center length.

### BRIEF DESCRIPTION OF THE DRAWINGS

[FIG. 1] FIG. 1 is a right-side view of an electric-motor-assisted bicycle in an embodiment.
[FIG. 2] FIG. 2 is a vertical cross-sectional view of the internal construction of a drive unit included in the electric-motor-assisted bicycle shown in FIG. 1.
[FIG. 3] FIG. 3 is an enlarged vertical cross-sectional view of a portion of FIG. 2.
[FIG. 4] FIG. 4 is an enlarged vertical cross-sectional view of another portion of FIG. 2.
[FIG. 5] FIG. 5 is a right-side view of the internal construction of the drive unit with the right housing member removed.
[FIG. 6] FIG. 6 is an enlarged right-side view of the drive unit attached to the bracket.
[FIG. 7] FIG. 7 is a cross-sectional view of a structure for attaching the drive unit to the bracket.
[FIG. 8] FIG. 8 is a right-side view of the drive unit.
[FIG. 9] FIG. 9 is an enlarged right-side view of a portion of the vehicle-body frame with the bracket attached thereto.
[FIG. 10] FIG. 10 is an enlarged right-side view of another portion of the vehicle-body frame with the bracket attached thereto.
[FIG. 11] FIG. 11 is an enlarged right-side view of yet another portion of the vehicle-body frame with the bracket attached thereto.
[FIG. 12] FIG. 12 is a perspective view of the drive unit.
[FIG. 13] FIG. 13 is a right-side view of a chain stay fixed to the bracket.

### DESCRIPTION OF THE EMBODIMENTS

The present teaching provides a way of minimizing the increase of the rear/center length in an electric-motor-assisted bicycle having a drive unit attached to the vehicle-body frame. Said teaching is focused on the structure with which the drive unit is attached to the vehicle-body frame.

The present teaching refers to details of the structure with which the drive unit is attached to the vehicle-body frame. The rear/center length increases if the drive unit is attached to the vehicle-body frame by means of three attachment portions, as described in JP 2014-196080 A. This aspect will be explained in detail below.

The three attachment portions are provided on the outer surface of the housing of the drive unit. A first attachment portion is located foremost of the three attachment portions as viewed from a side of the vehicle. The other two attachment portions (i.e. second and third attachment portions) are located rearward of the first attachment portion as viewed from a side of the vehicle. The second and third attachment portions are generally at the same position as measured in the front/rear direction with respect to the vehicle, and are spaced apart from each other in the top/bottom direction with respect to the vehicle. More specifically, the second attachment portion is located higher than the third attachment portion.

The drive unit is attached to the bracket provided on the bottom of the vehicle-body frame. To the bracket are connected a down tube connected to a head tube, a seat tube into which a seatpost is inserted that supports the saddle, and chain stays supporting the axle of the rear wheel. Thus, the three attachment portions of the drive unit need to be attached to regions in the bracket that are different from those regions to which the tubes and stays are connected.

In an attempt to reduce the rear/center length, the present teaching is focused on the relationship between the regions in the bracket to which the chain stays are connected, on one hand, and the regions in the bracket to which the second attachment portion is attached, on the other. The rear/center length increases when the region in the bracket to which a chain stay is attached and the associated region in the bracket to which the second attachment portion is attached are on the line segment connecting the shaft center of the axle of the rear wheel to the shaft center of the crank axle as viewed from a side of the vehicle. In other words, the chain stays are shifted rearward because the wall thickness (i.e. thickness as measured in the radial direction) of the boss of the second attachment portion presents an obstacle. If the rear/center length is not changed and the regions in the bracket to which the chain stays are attached are shifted rearward, the bracket may contact the rear wheel. In view of this, it may be considered how to arrange the regions in the bracket to which the chain stays are attached.

More specifically, it is considered lowering the drive unit such that the regions in the bracket to which the chain stays are attached are generally directly above the regions in the bracket to which the second attachment portion is attached as viewed from a side of the vehicle. However, this would make it difficult to provide a sufficient height of the drive unit relative to the ground surface (i.e. minimum ground clearance).

It is also considered an implementation where the regions in the bracket to which the chain stays are attached are generally directly below the regions in the bracket to which the second attachment portion is attached as viewed from a side of the vehicle. However, in this implementation, the positional relationship between these regions and the regions in the bracket to which the third attachment portion is attached must be considered.

Based on the above aspects, in order to minimize the increase of the rear/center length, not only the regions in the bracket to which the chain stays are attached needs to be adjusted, but also the regions in the bracket to which the drive unit is attached. The regions in the bracket to which the chain stays are attached and the regions in the bracket to which the drive unit is attached (particularly, the regions located rearward of the crank axle) may be suitably adjusted relative to the line segment connecting the shaft center of the axle of the rear wheel to the shaft center of the crank axle.

An embodiment will be described below with reference to the drawings. The same or corresponding parts are labeled with the same characters in the drawings and their description will not be repeated.

### [Electric-Motor-Assisted Bicycle]

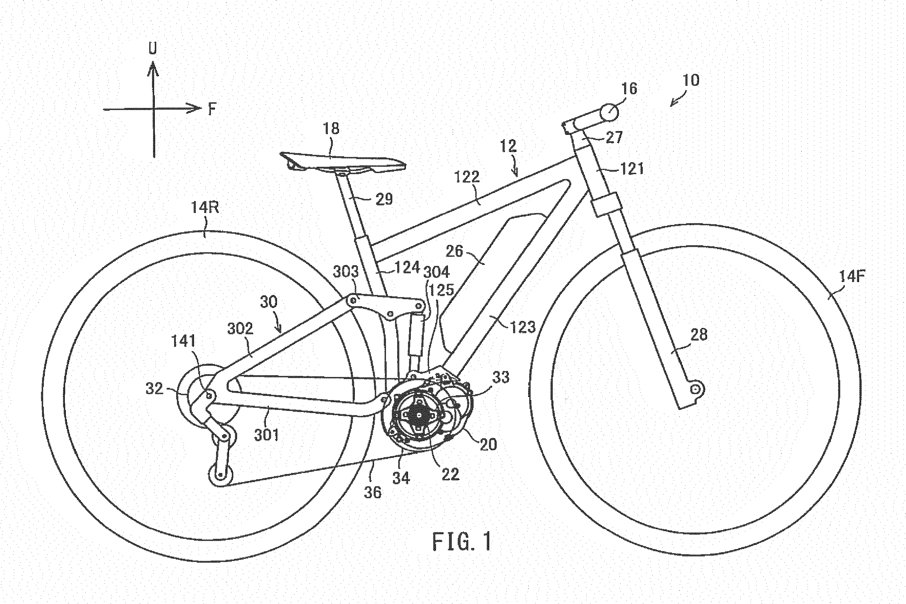

Referring to FIG. 1, an electric-motor-assisted bicycle 10 in an embodiment will be described. FIG. 1 is a schematic right-side view of the electric-motor-assisted bicycle 10.

In the following description, the directions "front/forward", "rear(ward)", "left", "right", "top/upward" and "bottom/downward" mean directions as perceived by a rider sitting on the saddle 18 of the electric-motor-assisted bicycle 10. In the drawings referred to in the following description, arrow "F" indicates the forward direction with respect to the vehicle; arrow "U" indicates the upward direction with respect to the vehicle; arrow "L" indicates the left direction with respect to the vehicle; and arrow "R" indicates the right direction with respect to the vehicle.

The electric-motor-assisted bicycle 10 includes a vehicle-body frame 12, a front wheel 14F, a rear wheel 14R, handlebars 16, a saddle 18, a drive unit 20, and a battery unit 26.

The vehicle-body frame 12 includes a head tube 121, a top tube 122, a down tube 123, a seat tube 124 and a bracket 125.

The head tube 121 is located at the front of the vehicle-body frame 12 and extends in a top/bottom direction. A stem 27 is inserted into the head tube 121 such that the stem is rotatable. Handlebars 16 are fixed to the top end of the stem 27. A front fork 28 is fixed to the bottom end of the stem 27. The front wheel 14F is rotatably attached to the bottom end of the front fork 28. That is, the front wheel 14F is supported by the vehicle-body frame 12 with the stem 27 and front fork 28 provided in between.

The top tube 122 is located rearward of the head tube 121 and extends in the front/rear direction. The front end of the top tube 122 is connected to the head tube 121. The rear end of the top tube 122 is connected to the seat tube 124.

The down tube 123 is located rearward of the head tube 121 and extends in the front/rear direction. The down tube 123 is located below the top tube 122. The front end of the down tube 123 is connected to the head tube 121. In the present embodiment, the front end of the down tube 123 is also connected to the front end of the top tube 122. The rear end of the down tube 123 is connected to the bracket 125.

The battery unit 26 is attached to the down tube 123. The battery unit 26 supplies the drive unit 20 with electric power. The battery unit 26 includes a battery and a controller. The battery is a chargeable/dischargeable battery. The controller controls the battery to be charged or discharged, and monitors battery output current, remaining battery level, and other parameters.

The seat tube 124 is located rearward of the top tube 122 and down tube 123 and extends in the top/bottom direction. The bottom end of the seat tube 124 is connected to the bracket 125. In other words, the seat tube 124 extends upwardly from the bracket 125.

The seat tube 124 is bent at the center as measured in the top/bottom direction. As such, the lower portion of the seat tube 124 extends in the top/bottom direction while the upper portion of the seat tube 124 extends in a direction angled relative to the top/bottom direction.

The seatpost 29 is inserted into the seat tube 124. The saddle 18 is attached to the top end of the seatpost 29.

The bracket 125 is located at the bottom of the vehicle-body frame 12. The bracket 125 supports the drive unit 20. The drive unit 20 generates driving forces to be transmitted to the rear wheel 14R which is located rearward of the front wheel 14F. The bracket 125 and drive unit 20 will be described in detail further below.

The vehicle-body frame 12 further includes a swingarm 30, a pair of connecting arms 303 and a suspension 304. The swingarm 30 includes a pair of chain stays 301 and a pair of seat stays 302.

The chain stays 301 extend in the front/rear direction. The chain stays 301 are arranged in the left/right direction. The rear wheel 14R is located between the chain stays 301. The chain stays 301 are positioned to be mirror images of each other. In view of this, only the right chain stay 301 is shown in FIG. 1.

The front end of each of the chain stays 301 is attached to the bracket 125. That is, the chain stays 301 extend rearwardly from the bracket 125. The chain stays 301 are positioned such that they are capable of swinging relative to the bracket 125 about an axis that extends in the left/right direction.

The axle 141 of the rear wheel 14R is attached to the rear ends of the chain stays 301 such that the axle cannot rotate. That is, the rear wheel 14R is supported on the chain stays 301 such that the rear wheel is capable of rotating about the axle 141. In short, the rear wheel 14R is supported by the vehicle-body frame 12. A multi-stage driven sprocket 32 is fixed to the rear wheel 14R.

The seat stays 302 extend in the front/rear direction. The seat stays 302 are arranged in the left/right direction. The rear wheel 14R is located between the seat stays 302. The seat stays 302 are positioned to be mirror images of each other. In view of this, only the right seat stay 302 is shown in FIG. 1.

The rear end of the left seat stay 302 is connected to the rear end of the left chain stay 301. The rear end of the right seat stay 302 is connected to the rear end of the right chain stay 301.

The connecting arms 303 extend in the front/rear direction. The connecting arms 303 are arranged in the left/right direction. The seat tube 124 is located between the connecting arms 303. The connecting arms 303 are positioned to be mirror images of each other. In view of this, only the right connecting arm 303 is shown in FIG. 1.

The connecting arms 303 are attached to the seat tube 124. The connecting arms 303 are positioned to be capable of swinging relative to the seat tube 124 about an axis that extends in the left/right direction.

As viewed from a side of the vehicle, the front ends of the connecting arms 303 are located forward of the seat tube 124. As viewed from a side of the vehicle, the rear ends of the connecting arms 303 are located rearward of the seat tube 124.

The rear end of the left connecting arm 303 is attached to the front end of the left seat stay 302. The left connecting arm 303 is positioned to be capable of swinging relative to the left seat stay 302 about an axis that extends in the left/right direction.

The rear end of the right connecting arm 303 is attached to the front end of the right seat stay 302. The right connecting arm 303 is positioned to be capable of swinging relative to the right seat stay 302 about an axis that extends in the left/right direction.

The suspension 304 is located forward of the seat tube 124 and rearward of the down tube 123. The top end of the suspension 304 is attached to the connecting arms 303. The suspension 304 is positioned to be capable of swinging relative to the connecting arms 303 about an axis that extends in the left/right direction. The bottom end of the suspension 304 is attached to the bracket 125. The suspension 304 is positioned to be capable of swinging relative to the bracket 125 about an axis that extends in the left/right direction. The suspension 304 is attached to the bracket 125 at a position that is forward of the position at which the seat tube 124 is attached to the bracket 125.

A driving sprocket 34 is attached to the drive unit 20 with a support member 33 provided in between. A chain 36 is wound about the driving sprocket 34 and driven sprocket 32.

Although not shown, a crankarm is attached to each of the ends of the crank axle 22, as measured in the axial direction, included in the drive unit 20. A pedal is attached to each of the crankarms.

### [Drive Unit]

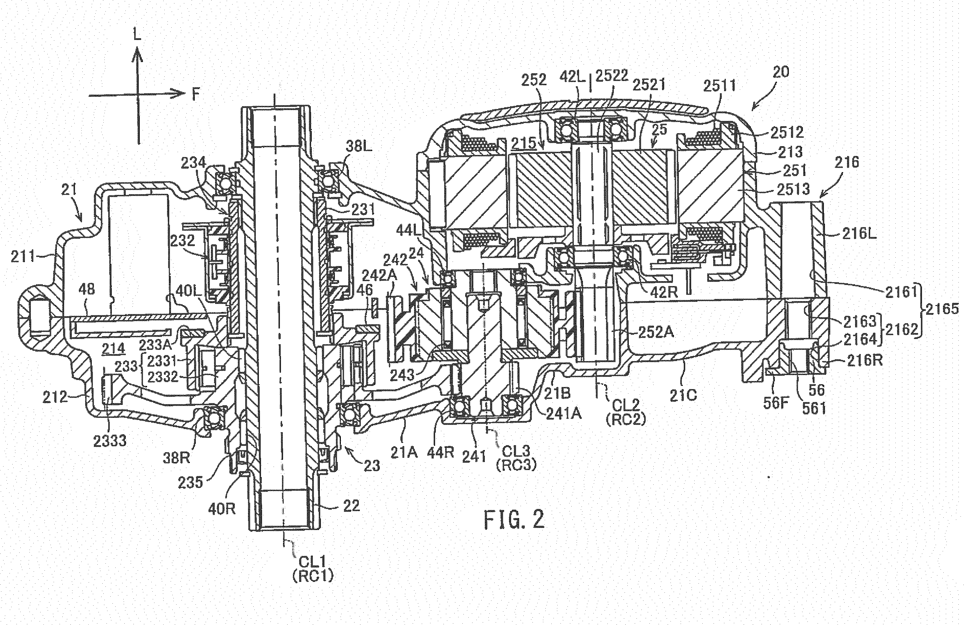

The drive unit 20 will be described with reference to FIG. 2. FIG. 2 is a vertical cross-sectional view of the internal construction of the drive unit 20.

The drive unit 20 includes a housing 21, a crank axle 22, a rotating shaft 23, a reduction gear 24 and a motor 25. These components will be described below.

The housing 21 is fixed to the bracket 125 by means of a plurality of fasteners. The housing 21 includes a housing member 211, a housing member 212 and a cover 213. The housing members 211 and 212 and cover 213 are made of a metal material. The metal material may be an aluminum alloy, for example.

The housing member 211 is laid over the housing member 212 from the left as measured in the left/right direction. Then, the housing member 211 is fixed to the housing member 212 by means of a plurality of fasteners. As a result, a space 214 is defined by the housing members 211 and 212.

The cover 213 is laid over the housing member 211 from the left as measured in the left/right direction. Then, the cover 213 is fixed to the housing member 211 by means of a plurality of fasteners. As a result, a space 215 is defined by the cover 213 outside the housing member 211 (i.e. to the left thereof).

The crank axle 22 extends through the housing 21 in the left/right direction. That is, the central axis CL1 of the crank axle 22 extends in the left/right direction. The central axis CL1 provides the rotational center RC1 of the crank axle 22 as viewed in an axial direction of the crank axle 22.

A bore extends through the crank axle 22 in the axial direction of the crank axle 22. That is, the crank axle 22 has the shape of a cylinder.

The crank axle 22 is supported on the housing 21 such that the crank axle is capable of rotating relative to the housing about the central axis CL1 of the crank axle 22. A bearing 38L that rotatably supports the crank axle 22 is fixed to the housing member 211. A bearing 38R, which rotatably supports the crank axle 22 with the driven member 2332 of the one-way clutch 233 described further below and the slide bearings 40L and 40R provided in between, is fixed to the housing member 212.

The crank axle 22 extends through the rotating shaft 23. The rotating shaft 23 is housed in the housing 21. The rotating shaft 23 will be described in detail further below.

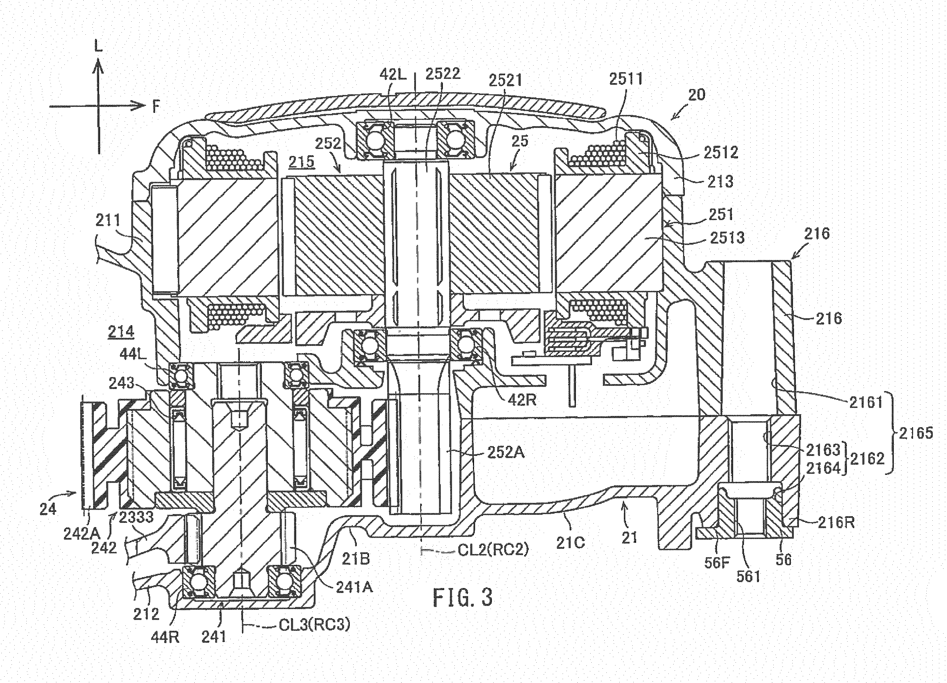

The motor 25 and reduction gear 24 will be described with reference to FIG. 3. FIG. 3 is an enlarged cross-sectional view of a portion of FIG. 2.

The motor 25 is housed in the housing 21. The motor 25 generates driving forces for assisting the rider in propelling the electric-motor-assisted bicycle 10. The motor 25 includes a stator 251 and a rotor 252.

The stator 251 includes a plurality of bobbins 2512 (14 bobbins in the present embodiment) around which coils 2511 are wound. An iron core 2513 is inserted into the bobbins 2512. The stator 251 is located within the space 215. The stator 251 is fixed to the housing member 211.

The rotor 252 is located inside the stator 251. The central axis CL2 of the rotor 252 is parallel to the central axis CL1 of the crank axle 22. That is, the rotor 252 is positioned parallel to the crank axle 22. The central axis CL2 provides the rotational center RC2 of the rotor 252 as viewed in an axial direction of the crank axle 22.

The rotor 252 includes a rotor body 2521 and an output shaft 2522. These components will be described below.

The outer periphery of the rotor body 2521 is magnetized to form N- and S-poles arranged alternately in the circumferential direction. In the present embodiment, seven N-poles and seven S-poles are provided.

The output shaft 2522 extends through the rotor body 2521. The output shaft 2522 is fixed to the rotor body 2521. That is, the output shaft 2522 rotates together with the rotor body 2521.

The output shaft 2522 is supported by two bearings 42L and 42R such that the output shaft is capable of rotating relative to the housing 21 about the central axis CL2. The bearing 42L is fixed to the cover 213. The bearing 42R is fixed to the housing member 211 to be located to the right of the rotor body 2521 (i.e. further in a second axial direction).

The output shaft 2522 extends through the housing member 211. An output gear 252A is provided on the portions of the output shaft 2522 that are located within the space 214.

The reduction gear 24 is housed in the housing 21. More specifically, the reduction gear 24 is located within the space 214. The reduction gear 24 is located to overlap portions of the motor 25 as viewed in an axial direction of the crank axle 22.

The central axis CL3 of the reduction gear 24 (i.e. central axis CL3 of the rotational shaft 241) is parallel to the central axis CL1 of the crank axle 22. That is, the reduction gear 24 is positioned parallel to the crank axle 22. The central axis CL3 provides the rotational center RC3 of the reduction gear 24 as viewed in an axial direction of the crank axle 22. The rotational center RC3 overlaps the stator 251 as viewed in an axial direction of the crank axle 22.

The reduction gear 24 includes a rotatable shaft 241 and a cylindrical portion 242. These components will be described below.

The cylindrical portion 242 has the shape of a cylinder. The cylindrical portion 242 includes a gear 242A that can engage the output gear 252A. The gear 242A has a larger diameter than the output gear 252A and includes more teeth than the output gear 252A. That is, the rotational speed of the gear 242A is lower than the output gear 252A.

The output shaft 241 is inserted into the cylindrical portion 242. The rotatable shaft 241 is positioned coaxially with the cylindrical portion 242. The rotatable shaft 241 is formed by press-fitting a small-diameter shaft portion having a gear 241A into a large-diameter shaft portion. The gear 241A is at a different location than the gear 242A as measured in the axial direction of the rotatable shaft 241. The gear 241A is located closer to the housing member 212 than the gear 242A is as measured in the left/right direction.

A one-way clutch 243 is positioned between the rotatable shaft 241 and cylindrical portion 242. Thus, when the rotor 252 rotates in the positive direction, the rotatable shaft 241 rotates together with the cylindrical portion 242. That is, driving forces from the motor 25 are transmitted to the gear 2333 via the reduction gear 24. Further, when the motor 24 is stationary and the gear 2333 rotates in the forward direction (i.e. in a direction associated with the advancement of the vehicle), the rotatable shaft 241 rotates relative to the cylindrical portion 242. That is, rotation of the gear 2333 is not transmitted to the rotor 252.

The rotatable shaft 241 is supported by the two bearings 44L and 44R such that the rotatable shaft is capable of rotating relative to the housing 21 about the central axis CL3. The bearing 44L is lightly press-fitted into the housing member 211. The bearing 44R is fixed to the housing member 212.

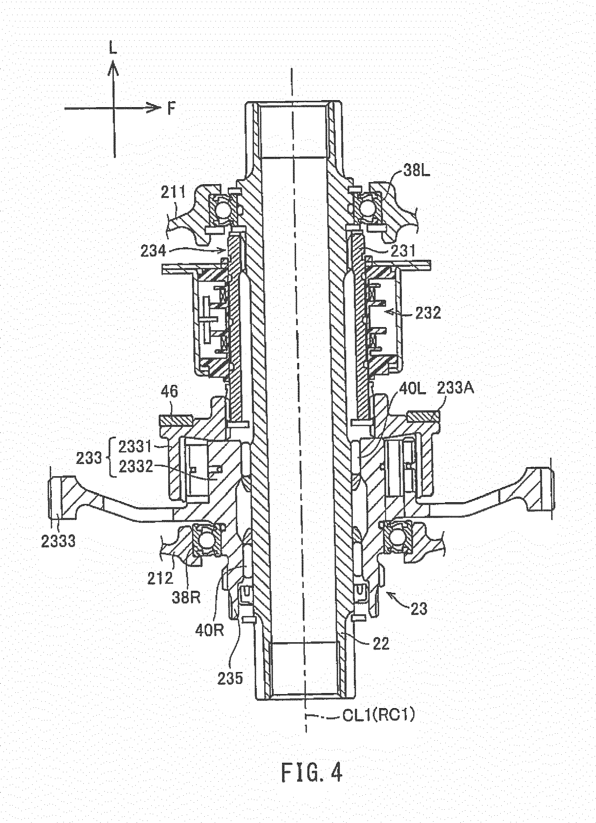

The rotatable shaft 23 will be described with reference to FIG. 4. FIG. 4 is an enlarged vertical cross-sectional view of another portion of FIG. 2.

The rotatable shaft 23 is positioned coaxially with the crank axle 22 and is capable of rotating together with the crank axle 22. The crank axle 23 includes a coupling shaft 231 and a one-way clutch 233.

The coupling shaft 231 has the shape of a cylinder. The crank axle 22 is inserted into the coupling shaft 231. The coupling shaft 231 is positioned coaxially with the crank axle 22.

The left end of the coupling shaft 231 (i.e. furthermost position thereon in a first axial direction) is coupled with the crank axle 22 by spline coupling or the like. As such, the coupling shaft 231 rotates together with the crank axle 22 regardless of whether the crank axle 22 rotates in the forward or rearward direction.

A torque detection device 232 is provided around the coupling shaft 231. The torque detection device 232 is supported on the housing member 211.

The torque detection device 232 detects torque generated in the coupling shaft 231 when the rider pedals. The torque detection device 232 is a known magnetostrictive torque sensor. The torque detection device 232 provides a signal associated with the detected torque to a controller mounted on a substrate 48. The controller refers to the signal associated with the torque detected by the torque detection device 232 to recognize the state of the bicycle in terms of the pedaling by the rider, and controls the motor 25.

The one-way clutch 233 is located closer to the housing member 212 than the torque detection device 232 is as measured in the axial direction of the crank axle 22. The one-way clutch 233 is positioned coaxially with the crank axle 22.

The one-way clutch 233 includes a driving member 2331 and a driven member 2332. These component will be described below.

The driving member 2331 has the shape of a cylinder. The right end of the coupling shaft 231 (i.e. furthermost position thereon in the second axial direction) is inserted into the left end of the driving member 2331 (i.e. furthermost position thereon in the first axial direction). The driving member 2331 is positioned coaxially with the coupling shaft 231. The right end of the coupling shaft 231 (i.e. furthermost position thereon in the second axial direction) is coupled with the left end of the driving member 2331 (i.e. furthermost position thereon in the first axial direction) by spline coupling or the like. As a result, the driving member 2331 rotates together with the coupling shaft 231 regardless of whether the coupling shaft 231 rotates in the forward or rearward direction. That is, the driving member 2331 rotates together with the crank axle 22 regardless of whether the crank axle 22 rotates in the forward or rearward direction. The coupling shaft 231 and driving member 2331 function as a crank-rotation input shaft 234 that rotates in an integral manner with the crank axle 22.

An annular attachment surface 233A is provided as part of the outer periphery of the driving member 2331. The attachment surface 233A expands radially with respect to the driving member 2331 and extends in the circumferential direction. A ring magnet 46 is fixed to the attachment surface 233A. That is, the ring magnet 46 rotates together with the driving member 2331. Thus, detection element mounted on the substrate 48 provided within the housing 21 may be used to detect changes in magnetic field caused by rotation of the ring magnet 46, thereby detecting rotation of the driving member 2331 (i.e. crank axle 22).

The driven member 2332 has the shape of a cylinder. The crank axle 22 is inserted into the driven member 2332. Slide bearings 40L and 40R are provided between the driven member 2332 and crank axle 22. Thus, the driven member 2322 is positioned to be coaxial with the crank axle 22 and capable of rotating relative to it.

The driven member 2332 is inserted into the right end of the driving member 2331 (i.e. furthermost position thereon in the second axial direction). A ratchet mechanism working as a one-way clutch mechanism is provided between the driven member 2332 and the right end of the driving member 2331 (i.e. furthermost position thereon in the second axial direction). Thus, rotational forces in the forward direction from the driving member 2331 are transmitted to the driven member 2332, while rotational forces in the rearward direction from the driving member 2331 are not transmitted to the driven member 2332.

The driven member 2332 is supported by the bearing 38R fixed to the housing member 212 such that the driven member 2332 is capable of rotating relative to the housing 21 about the central axis CL1 of the crank axle 22.

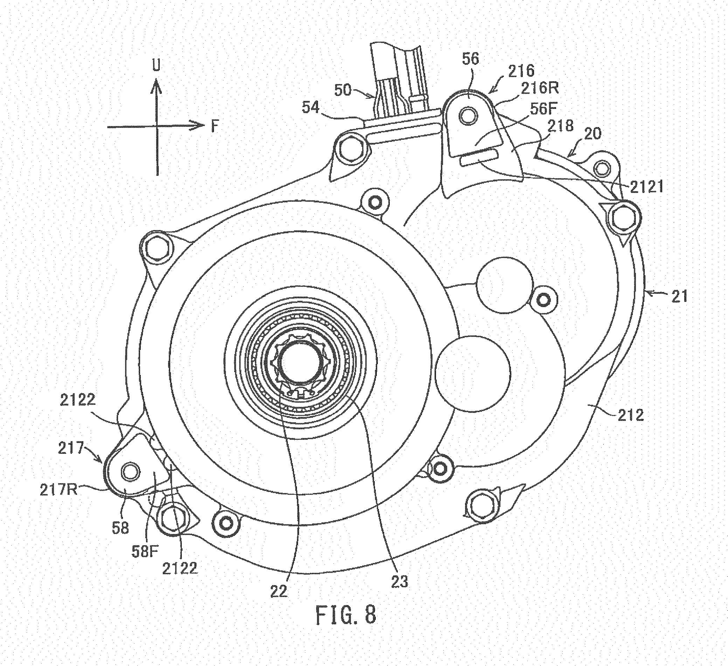

The driven member 2332 extends through the housing member 212. The driving sprocket 34 (see FIG. 1) is attached, by means of the support member 33 (see FIGS. 1 and 8, for example), to the portions of the driven member 2332 that are located outward (i.e. to the right) of the housing 21.

The driven member 2332 includes a (driving) gear 2333. The gear 2333 engages the gear 241 of the reduction gear 24. The gear 2333 has a larger diameter than the gear 241A and has more teeth than the gear 241A. That is, the rotational speed of the gear 2333 is lower than the rotational speed of the gear 241A.

The driven member 2332 implements a resultant-force output shaft 235 that provides the resultant of a human-generated force provided through the one-way clutch 233 (i.e. pedaling force) and a motor-generated driving force provided through the gear 2333. That is, the resultant-force output shaft 235 is included in the rotatable shaft 23.

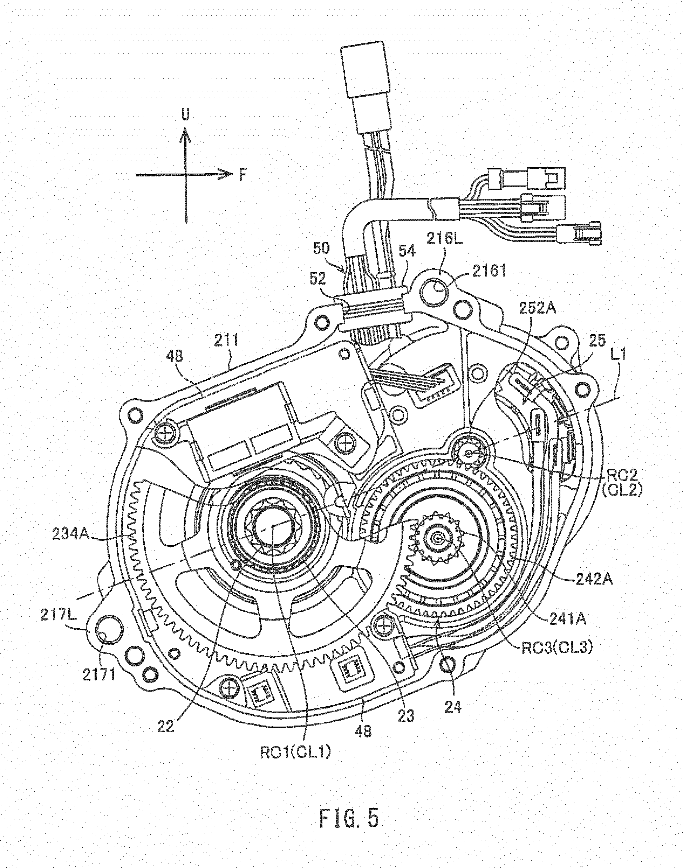

The relationship between the rotational center RC1 of the crank axle 22, the rotational center RC2 of the rotor 252 and the rotational center RC3 of the reduction gear 24 will be described with reference to FIG. 5. FIG. 5 is a right-side view of the internal construction of the drive unit 20 with the housing member 212 removed.

The rotational center RC3 is located forward of the rotational center RC1 as measured in the front/rear direction with respect to the vehicle. The rotational center RC2 is located forward of the rotational center RC3 as measured in the front/rear direction with respect to the vehicle. That is, the rotational center RC2 is located forward of the rotational center RC1 as measured in the front/rear direction with respect to the vehicle. In short, the motor 25 is located forward of the crank axle 22 as measured in the front/rear direction with respect to the vehicle.

The rotational center RC3 is generally located lower than a straight line L1 connecting the rotational center RC1 to the rotational center RC2 as seen from a side of the vehicle.

Further, as shown in FIG. 5, the substrate 48 is located within the housing 21. The substrate 48 controls power supply to the motor 25. The substrate 48 surrounds the crank axle 22 as viewed in an axial direction of the crank axle 22. In the implementation shown in FIG. 5, the substrate 48 generally has the shape of a "C" as viewed in an axial direction of the crank axle 22.

An outlet 52 is formed in the housing 21 to allow cables 50 connected to the substrate 48 to be routed out. In the present embodiment, a grommet 54 is provided on the outlet 52. The grommet 54 is implemented by an elastic body. The grommet 54 is provided to protect the cables 50 and prevent dust and water from entering. The cables 50 are routed out from the drive unit 20 through the grommet 54. The cables 50 are connected to the battery unit 26 (see FIG. 1).

### [Structure for Attaching Drive Unit to Bracket]

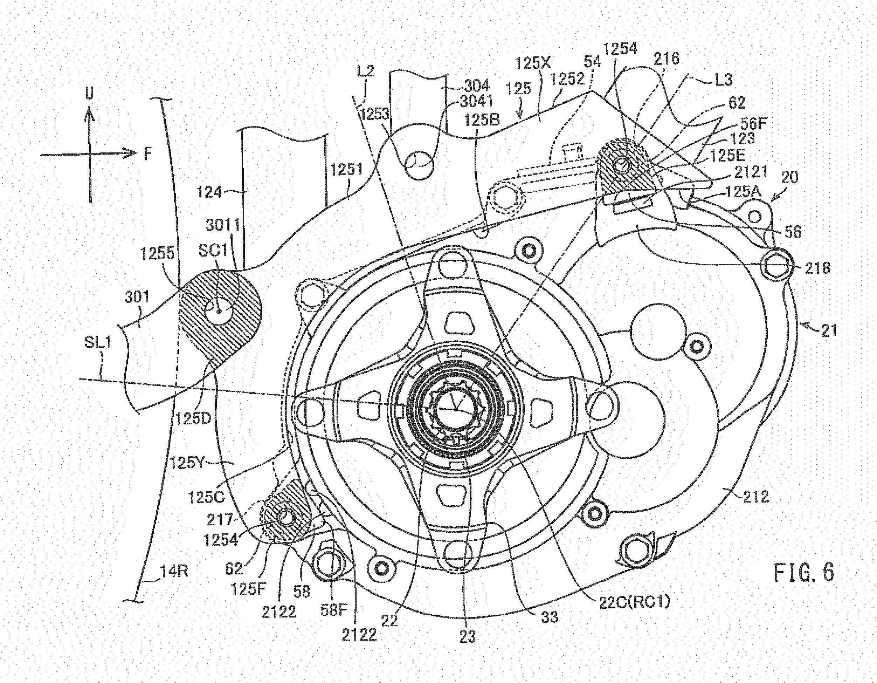

A structure for attaching the drive unit 20 to the bracket 125 will be described with reference to FIG. 6. FIG. 6 is an enlarged right-side view of the drive unit 20 attached to the bracket 125.

### [Bracket]

The bracket 125 includes a pair of side plates 1251 arranged to the left and right. The side plates 1251 extend in the front/rear direction and top/bottom direction. The side plates 1251 are arranged in the left/right direction. The side plates 1251 are positioned to be mirror images of each other. In view of this, FIG. 6 only shows the right side plate 1251.

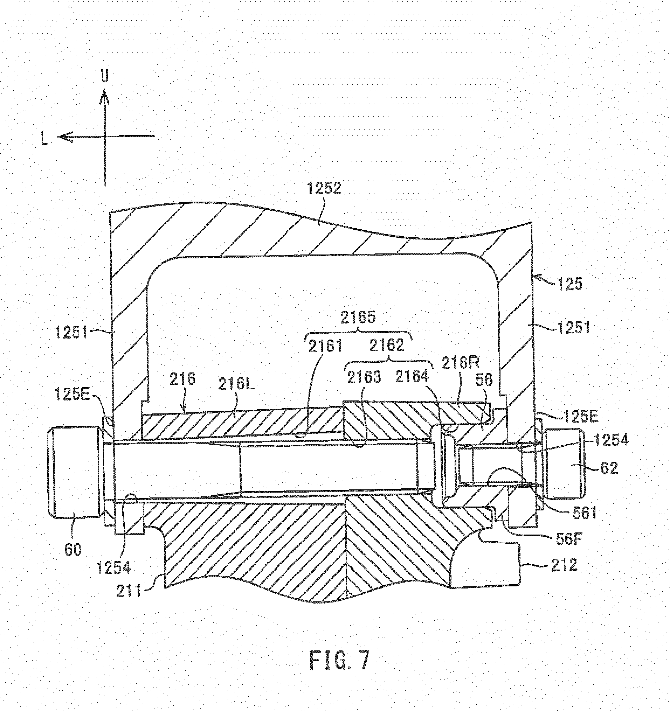

As shown in FIG. 7, the bracket 125 further includes a top plate 1252. The top plate 1252 connects the side plates 1251. The left side plate 1251 extends downwardly from the left edge of the top plate 1252. The right side plate 1251 extends downwardly from the right edge of the top plate 1252. Although not expressly shown in FIG. 7, the bottom end of the seat tube 124 and the bottom end of the down tube 123 are connected to the top plate 1252.

Returning to FIG. 6, the side plates 1251 generally extend in the front/rear direction. Each side plate 1251 includes an edge 125A, an edge 125B and an edge 125C.

The edge 125A extends in the front/rear direction. The edge 125B extends forwardly and upwardly. That is, the front end of the edge 125B is located higher than the rear end of the edge 125B. The front end of the edge 125B is connected to the rear end of the edge 125A. The edge 125C extends rearwardly and downwardly from the rear end of the edge 125B to form an arc. The edge 125C forms an arc with a generally constant distance from the rotational center RC1. The rear end of the edge 125C is located rearward and downward of the front end of the edge 125C. The front end of the edge 125C is connected to the rear end of the edge 125B.

The portion of each side plate 1251 that has the edges 125A and 125B generally extends forwardly and upwardly. This portion will be hereinafter referred to as first portion 125X.

A hole 1253 is formed in a rear portion of the first portion 125X. The hole 1253 extends the first portion 125X in the left/right direction (or thickness direction). The hole 1253 is located above the edge 125B. A shaft 3041 provided on the bottom portion of the suspension 304 is inserted into the hole 1253. Thus, the suspension 304 is swingably attached to the first portion 125X.

The portion of each side plate 1251 that has the edge 125C generally extends rearwardly and downwardly from the rear end of the first portion 125X to form an arc. This portion will be hereinafter referred to as second portion 125Y. The front end of the second portion 125Y is connected to the rear end of the first portion 125X. The front end of the second portion 125Y is located higher than the rear end of the second portion 125Y.

The second portion 125Y includes a region 125D to which the front end of the associated chain stay 301 is to be attached. For ease of understanding, the region 125D is hatched in FIG. 6. The region 125D is similarly hatched in other drawings referred to for describing the region 125D.

The region 125D is a portion of the second portion 125Y that overlaps the associated chain stay 301 as viewed from a side of the vehicle. The region 125D is located at the center of the extension of the second portion 125Y. The region 125D is located rearward of the edge 125C.

A hole 1255 is formed in the region 125D. That is, the region 125D includes a hole 1255. A shaft 3011 provided on the front end of the chain stay 301 is inserted into the hole 1255. Thus, the chain stay 301 is swingably attached to the bracket 125 (more specifically, associated side plate 1251).

### [Attachment Portions of Drive Unit]

Two attachment portions 216 and 217 included in the drive unit 20 will be described with reference to FIG. 8. FIG. 8 is a right-side view of the drive unit 20.

The attachment portion 216 is provided on the housing 21. The attachment portion 216 protrudes upward from the outer surface of the housing 21. The attachment portion 216 is located higher than the crank axle 22. The attachment portion 216 is located forward of the grommet 54.

As shown in FIG. 2, the attachment portion 216 includes a boss 216L and 216R. The attachment portion 216 will be described in detail below with reference to FIG. 2.

The boss 216L is provided on the housing member 211. The boss 216L protrudes from the outer surface of the housing member 211.

A bore 2161 is formed in the boss 216L. The bore 2161 extends through the boss 216L in the left/right direction.

The boss 216R is provided on the housing member 212. The boss 216R protrudes from the outer surface of the housing member 212.

A bore 2162 is formed in the boss 216R. The bore 2162 extends through the boss 216R in the left/right direction.

The bore 2162 includes a small-diameter portion 2163 and a large-diameter portion 2164. These portions will be described below.

The small-diameter portion 2163 is located closer to the bore 2161 than the large-diameter portion 2164 is as measured in the left/right direction. The inner periphery of the small-diameter portion 2163 is threaded. That is, the small-diameter portion 2163 of the bore 2162 serves as a screw hole.

The large-diameter portion 2164 has a larger diameter than the small-diameter portion 2163. The inner periphery of the large-diameter portion 2164 is not threaded. The large diameter portion 2164 of the bore 2162 serves as an insertion hole.

The bore 2161 will be described with reference to FIG. 5. The bore 2161 is generally located higher than the straight line L1. That is, the bore 2161 is located on the side of the straight line L1 that is opposite to that associated with the rotational center RC3. The bore 2161 is located forward of the substrate 48. The bore 2161 is located higher than the motor 25. The bore 2161 is located rearward of the rotational center RC2. The bore 2161 is located forward of the grommet 54. The bore 2161 is located generally at the same position as the rotational center RC3 as measured in the front/rear direction. The bore 2161 is located forward of the rotational center RC1.

Returning to FIG. 2, when the housing member 211 is attached to the housing member 212, the bores 2161 and 2162 are positioned to be coaxial. That is, the bores 2161 and 2162 implement a bore 2165 extending through the attachment portion 216 in the left/right direction.

In FIG. 2, a fitting 56 is lightly press-fitted into the large-diameter portion 2164 of the bore 2162. The fitting 56 is used to attach the attachment portion 216 to the bracket 125. The fitting 56 as a whole has the shape of a cylinder. A deformed flange 56F is provided that is integral with the right end of the fitting 56 (as measured in the axial direction). The deformed flange 56F has different lengths as measured in circumferentially different directions perpendicular to the axial direction of the fitting 56. A rotation stop for the fitting 56 is realized as the deformed flange 56F is contactable with a protrusion 2121 provided on the outer surface of the housing member 212 (see FIGS. 6 and 8).

Returning to FIG. 8, the attachment portion 217 is provided on the housing 21. The attachment portion 217 protrudes rearwardly and downwardly from the outer surface of the housing 21. The attachment portion 217 is located rearward of the crank axle 22. The attachment portion 217 is located lower than the crank axle 22. The attachment portion 217 is located rearward of the attachment portion 216. The attachment portion 217 is located lower than the attachment portion 216.

Similar to the attachment portion 216, the attachment portion 217 includes a boss 217L (see FIG. 5) provided on the housing member 211 and a boss 217R provided on the housing member 212. As shown in FIG. 5, a bore 2171 is formed in the boss 217L. Similar to the boss 216R, the boss 217R has a bore including a small-diameter portion and a large-diameter portion.

When the housing member 211 is attached to the housing member 212, the bore 2171 in the boss 217L and the bore in the boss 217R are positioned to be coaxial. That is, the bore 2171 in the boss 217L and the bore in the boss 217R implement a bore extending through the attachment portion 217 in the left/right direction.

As shown in FIG. 8, a fitting 58 is lightly press-fit into the large-diameter portion of the bore in the boss 217R. The fitting 58 is used to attach the attachment portion 217 to the bracket 125. Similar to the fitting 56, the fitting 58 as a whole has the shape of a cylinder. A deformed flange 58F is provided that is integral with the right end of the fitting 58 (as measured in the axial direction) (see FIGS. 6 and 8). The deformed flange 58F has different lengths as measured in circumferentially different directions perpendicular to the axial direction of the fitting 58. A rotation stop for the fitting 58 is realized as the deformed flange 58F is contactable with protrusions 2122 provided on the outer surface of the housing member 212 (see FIGS. 6 and 8).

The bore 2171 will be described with reference to FIG. 5. The bore 2171 is generally located lower than the straight line L1. The bore 2171 is located rearward of the rotational center RC2. The bore 2171 is located lower than the rotational center RC2. The bore 2171 is located rearward of the substrate 48. The bore 2171 is located rearward of the rotational center RC1 and the rotational center RC3.

### [Positions on Bracket to Which Two Attachment Portions of Drive Unit Are to Be Attached]

As shown in FIG. 6, the bracket 125 includes a region 125E to which the attachment portion 216 is to be attached and a region 125F to which the attachment portion 217 is to be attached. These regions 125E and 125F will be described below. For ease of explanation, the regions 125E and 125F are hatched in the drawings referred to in the following description.

First, the region 125E will be described. The region 125E is provided in a front portion of the first portion 125X. The region 125E is a region in the first portion 125X that the attachment portion 216 is to overlap as viewed from a side of the vehicle. In FIG. 6, the head of a bolt 62 for attaching the attachment portion 216 to the first portion 125X is indicated by phantom lines. The stem of the bolt 62 is inserted into a hole 1254 formed in the region 125E. That is, the region 125E includes the hole 1254.

The region 125E is located forward of the hole 1253. The region 125E is located closer to the bottom end of the down tube 123 (i.e. end to be attached to the bracket 125) than the grommet 54 is.

The attachment portion 216 being attached to the region 125E of the bracket 125 will be described with reference to FIG. 7. FIG. 7 is a cross-sectional view of a structure for attaching the attachment portion 216 to the bracket 125.

The bolt 60 is inserted into the bore 2165 in the attachment portion 216 from the left. The bolt 60 is also inserted into the hole 1254 formed in the left side plate 1251. The external thread on the periphery of the bolt 60 engages the thread on the internal periphery of the bore 2162. As the bolt 60 is tightened, the boss 216L contacts the left side plate 1251.

A hole 561 is formed in the fitting 56. The bolt 62 is inserted into the hole 561 from the right. The bolt 62 is also inserted into the hole 1254 formed in the right side plate 1251. The external thread on the periphery of the bolt 62 engages the thread on the internal periphery of the hole 561. As the bolt 62 is tightened, the fitting 56 that has been lightly press-fitted into the large-diameter portion 2164 of the bore 2162 moves to the right (i.e. in the direction in which it moves out of the large-diameter portion 2164 of the bore 2162) and contacts the right side plate 1251.

Now, the region 125F will be described. The region 125F is provided in a rear portion of the second portion 125Y. The region 125F is a region in the second portion 125Y that the attachment portion 217 is to overlap as viewed from a side of the vehicle. In FIG. 6, the head of the bolt 62 for attaching the attachment portion 217 to the second portion 125Y is indicated by phantom lines. The stem of the bolt 62 is inserted into the hole 1254 formed in the region 125F. That is, the region 125F includes the hole 1254.

The region 125F is located lower than the region 125D. That is, the region 125F is located lower than the center SC1 about which the associated chain stay 301 swings relative to the bracket 125. The region 125F is located forward of the swing center SC1.

The region 125F is located rearward of the position on the bracket 125 to which the seat tube 124 is attached as measured in the direction in which the second portion 125Y extends. The region 125F is located lower than the bottom end of the seat tube 124 (i.e. end to be attached to the bracket 125). In the implementation shown in FIG. 6, the region 125F is located directly below the bottom end of the seat tube 124.

The attachment portion 217 is attached to the region 125F of the bracket 125 in the same manner in which the attachment portion 216 is attached to the region 125E of the bracket 125, and thus no detailed description will be provided in this respect.

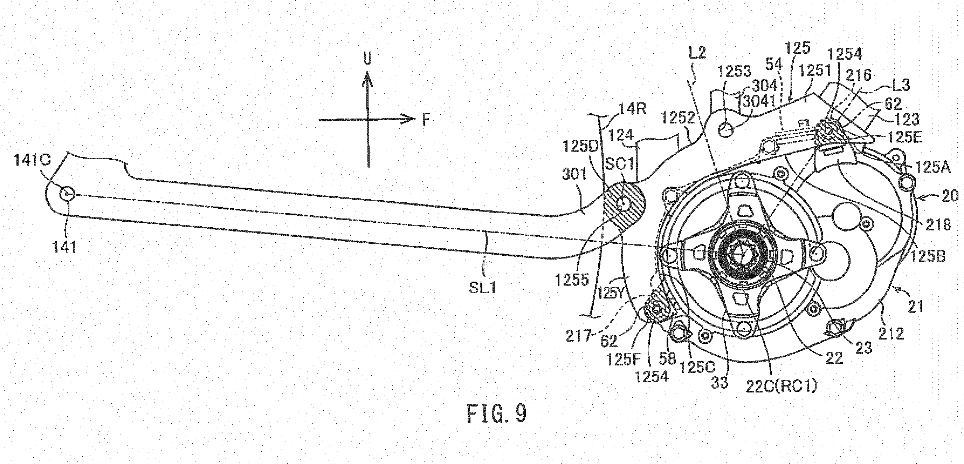

The positional relationship between the regions 125E and 125F will be described with reference to FIG. 9. FIG. 9 is an enlarged right-side view of a portion of the vehicle-body frame 12 to which the bracket 125 has been attached.

The region 125E is generally located higher than a line segment SL1. The line segment SL1 connects the shaft center 141C of the axle 141 of the rear wheel 14R to the shaft center 22C of the crank axle 22 (i.e. rotational center RC1). The length of the line segment SL1 indicates the rear/center length.

The region 125F is located lower than the line segment SL1. On the other hand, the region 125D is generally located higher than the line segment SL1. That is, the regions 125F and 125D are not arranged on the line segment SL1. In short, the regions 125F and 125D do not overlap the line segment SL1.

In the implementation shown in FIG. 9, the front end of each chain stay 301 is curved upwardly near the bracket 125. That is, the most of the chain stay 301 extends along the line segment SL1.

In the implementation shown in FIG. 9, the bottom end of the seat tube 124 and the bottom end of the suspension 304 are generally located higher than the line segment SL1.

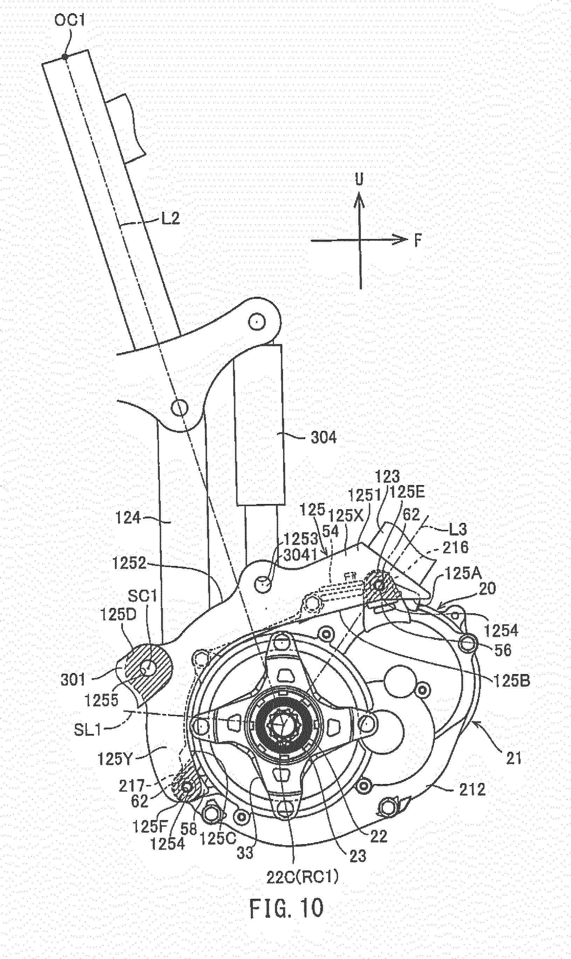

The positional relationship between the regions 125E and 125F will be described with reference to FIG. 10. FIG. 10 is an enlarged right-side view of another portion of the vehicle-body frame 12 to which the bracket 125 has been attached.

The region 125E is generally located forward of a straight line L2. The straight line L2 connects the center of the opening, OC1, on the top end of the seat tube 124 to the shaft center 22C of the crank axle 22. The region 125F is generally located rearward of the straight line L2. The region 125D is generally located rearward of the straight line L2.

In the implementation shown in FIG. 10, the bottom end of the suspension 304 is generally located forward of the straight line L2. On the other hand, the bottom end of the seat tube 124 is generally located rearward of the straight line L2.

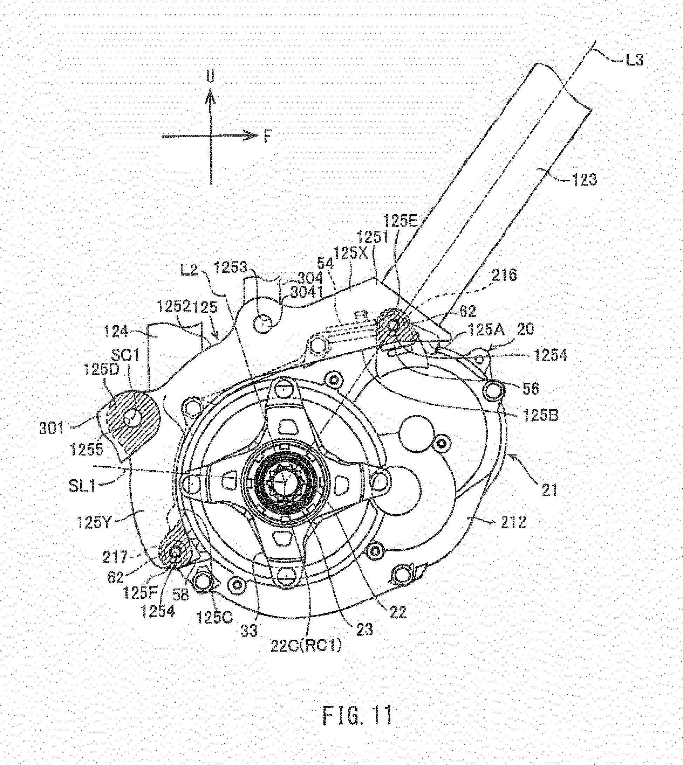

The positional relationship between the regions 125E and 125F will be described with reference to FIG. 11. FIG. 11 is an enlarged right-side view of yet another portion of the vehicle-body frame 12 to which the bracket 125 has been attached.

The region 125E is positioned to overlap a straight line L3 as viewed from a side of the vehicle. As viewed from a side of the vehicle, the straight line L3 passes through the shaft center 22C of the crank axle 22 and extends parallel to the down tube 123. The region 125F is generally located rearward of the straight line L3.

In the implementation shown in FIG. 11, the bottom end of the suspension 304, the bottom end of the seat tube 124 and the region 125D are located rearward of the straight line L3.

In the electric-motor-assisted bicycle 10, the regions 125D and 125F are not arranged on the line segment SL1. Thus, the attachment portion 217 (more particularly, bosses 217L and 217R) do not present an obstacle in positioning of the chain stay 301 when being attached to the bracket 125. As such, the rear/center length (i.e. length of the line segment SL1) may be reduced compared with that in implementations where the regions 125D and 125F are arranged on the line segment SL1.

In the electric-motor-assisted bicycle 10, the motor 25 is located forward of the crank axle 22 as viewed from a side of the vehicle. Thus, the rear/center length may be reduced compared with that in implementations where the motor 25 is located rearward of the crank axle 22.

In the electric-motor-assisted bicycle 10, the rotational center RC3 of the reduction gear 24 is generally located lower than the straight line L1. Thus, the center of gravity of the drive unit 20 may be lowered. Further, a sufficient space for allowing the cables 50 to be routed out may be provided in an upper portion of the housing 21 (i.e. space located higher than the straight line L1).

The electric-motor-assisted bicycle 10 includes the suspension 304. Thus, the bracket 125 needs to include a region to which the bottom end of the suspension 304 is to be connected.

In the bracket 125, the region 125E is provided in a front portion of the first portion 125X, while the region 125F is provided in a rear portion of the second portion 125Y. That is, the region 125E is provided in a front end portion of the associated side plate 1251, while the region 125F is provided in a rear end portion of the side plate 1251. Thus, a region to which the bottom end of the suspension 304 is to be connected may be provided more easily.

In the electric-motor-assisted bicycle 10, the grommet 54 is located forward of the crank axle 22 and rearward of the attachment portion 216. Thus, regions in the bracket 125 to which the seat tube 124 and suspension 304 are to be attached may be provided more easily.

### [Routing of Cables Extending from Drive Unit]

As shown in FIG. 5, the grommet 54 through which the cables 50 can be routed out is provided on the top of the housing 21. As shown in FIG. 6, when the drive unit 20 is attached to the bracket 125, the cables 50 (see FIG. 5) extending from out of the drive unit 20 pass through a hole (not shown) formed in the bracket 125 and enter the down tube 123. As shown in FIG. 1, the cables 50 are connected to the battery unit 26 provided on the down tube 123 and located higher than the drive unit 20. In the electric-motor-assisted bicycle 10, the length of the cables 50 may be reduced.

### [Geometry of Exterior of Housing]

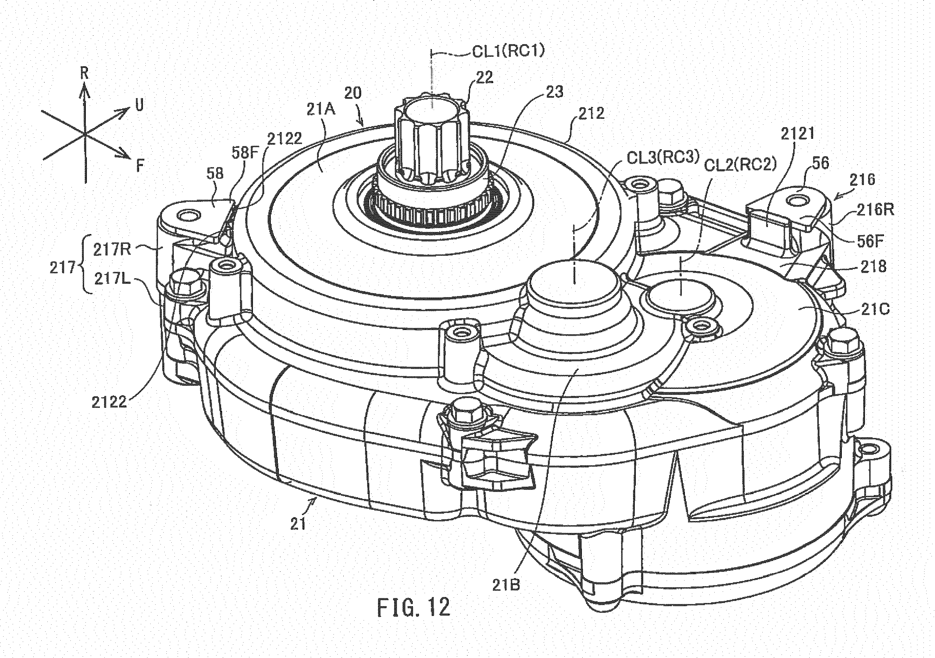

In the drive unit 20, as shown in FIG. 12, the housing 21 includes a (third) side portion 21A, a (second) side portion 21B and a (first) side portion 21C. FIG. 12 is a perspective view of the drive unit 20. These side portions 21A, 21B and 21C will be described below with reference to FIG. 12.

The side portion 21A is provided as part of the right side of the housing 21. That is, the side portion 21A is provided as part of the housing member 212. The side portion 21A surrounds the crank axle 22. That is, the side portion 21A is annular in shape.

The side portion 21A will be described with reference to FIG. 2. The side portion 21A overlaps the gear 2333 as viewed from a side of the vehicle. In the implementation shown in FIG. 2, the side portion 21A overlaps portions of the gear 2333 that are located inward of the teeth formed on the periphery of the gear.

The inner periphery of the side portion 21A is located to the right of the outer periphery of the side portion 21A (i.e. outward thereof as measured in the left/right direction). That is, the side portion 21A protrudes toward the right (i.e. outwardly as measured in the left/right direction) as it goes toward the central axis CL1 of the crank axle 22. The protrusion height of the side portion 21A toward the right (i.e. outwardly as measured in the left/right direction) changes at a substantially constant rate along a radical direction of the crank axle 22. That is, the side portion 21A is a convex slope. Thus, the side portion 21A comprises a convex section overlapping a portion of the driven gear (2333) as viewed from a side of the bicycle.

Returning to FIG. 12, the side portion 21B is located toward the left of the side portion 21A (i.e. inward thereof as measured in the left/right direction). In other words, the side portion 21A is located toward the right of the side portion 21B (i.e. outward thereof as measured in the left/right direction). The side portion 21B is located outward of the side portion 21A as measured in a direction perpendicular to the central axis CL1 of the crank axle 22 (in a radial direction). The side portion 21B is located forward of the side portion 21A. The side portion 21B extends in a circumferential direction of the reduction gear 24 around the central axis CL3. The inner periphery and outer periphery of the side portion 21B are located at the same position as measured in the left/right direction. That is, the side portion 21B is a flat surface.

The side portion 21B will be described with reference to FIG. 2. The side portion 21B overlaps the reduction gear 24 as viewed from a side of the vehicle. In the implementation shown in FIG. 2, the side portion 21B overlaps the cylindrical portion 242 of the reduction gear 24.

Returning to FIG. 12, the side portion 21C is located toward the left of the side portion 21B (i.e. inward thereof as measured in the left/right direction). In other words, the side portion 21B is located toward the right of the side portion 21C (i.e. outward thereof as measured in the left/right direction). The side portion 21C is located outward of the side portion 21A as measured in a direction perpendicular to the central axis CL1 of the crank axle 22 (i.e. in a radial direction thereof). The side portion 21C is located outward of the side portion 21B in a direction perpendicular to the central axis CL2 of the reduction gear 24 (i.e. in a radial direction thereof). The side portion 21C extends in a circumferential direction of the rotor 252 around the central axis CL2.

The side portion 21C will be described with reference to FIG. 2. The side portion 21C overlaps the motor 25 as viewed from a side of the vehicle. In the implementation shown in FIG. 2, the outer periphery of the side portion 21C overlaps the stator 251, while the inner periphery of the side portion 21C overlaps the rotor 252.

The inner periphery of the side portion 21C is located to the right of the outer periphery of the side portion 21C (i.e. outward as measured in the left/right direction). That is, the side portion 21C protrudes toward the right (i.e. outwardly as measured in the left/right direction) as it goes toward the central axis CL2 of the rotor 252. The protrusion height of the side portion 21C toward the right (i.e. outwardly as measured in the left/right direction) changes at a rate that decreases as it goes toward the central axis CL2. That is, the side portion 21C is a dome-shaped slope. Thus, the side portion 21C comprises a convex section overlapping a portion of the motor 25 as viewed from a side of the bicycle.

Returning to FIG. 12, the boss 216R of the attachment portion 216 is located outward of the side portion 21C as measured in a direction perpendicular to the central axis CL2 of the rotor 252 (i.e. in a radial direction thereof). The right end surface of the boss 216R is located toward the right of the outer periphery of the side time portion 21C (i.e. outward thereof as measured in the left/right direction).

A connecting portion 218 is provided on the right side of the housing 21. The connecting portion 218 protrudes toward the right (i.e. outwardly as measured in the left/right direction) from the right side of the housing 21. The connecting portion 218 extends in a radial direction of the rotor 252. The connecting portion 218 connects the side portion 21C to the side (i.e. outer periphery) of the boss 216R.

In the electric-motor-assisted bicycle 10, the housing 21 includes a side portion 21A. This will improve the stiffness of the housing 21.

In the electric-motor-assisted bicycle 10, the housing 21 includes a side portion 21C. This will improve the stiffness of the housing 21.

In the electric-motor-assisted bicycle 10, the side portions 21A, 21B and 21C are located at different positions as measured in the left/right direction. This will further improve the stiffness of the housing 21.

In the electric-motor-assisted bicycle 10, the connecting portion 218 is provided as part of the right side of the housing 21. This will further improve the stiffness of the housing 21.

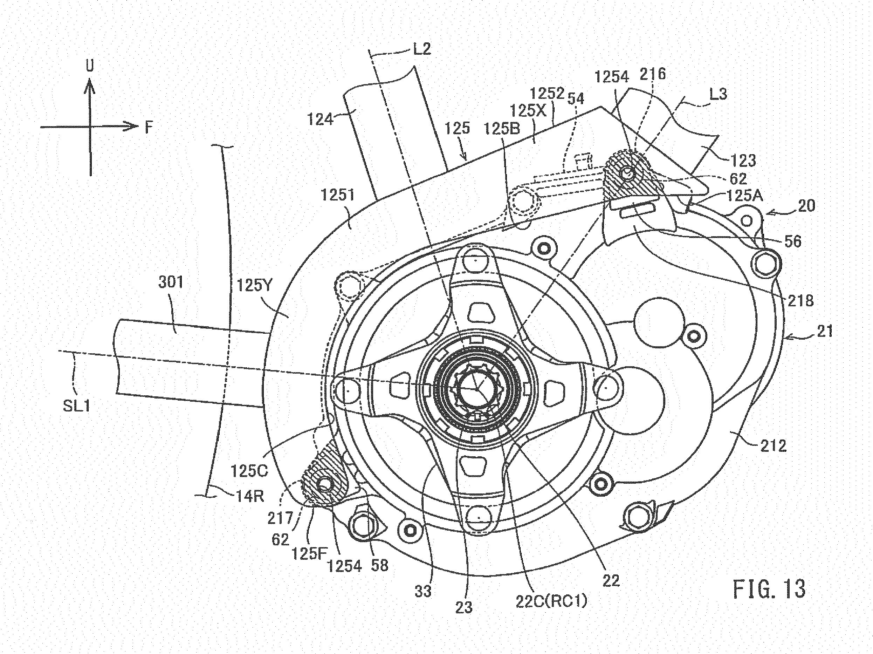

The above embodiment describes an implementation where the chain stays 301 are swingably attached to the bracket 125; alternatively, the chain stays 301 may be fixed to the bracket 125, as shown in FIG. 13. In this implementation, the region 125F does not overlap the line segment SL1 as viewed from a side of the vehicle. That is, the region in the bracket 125 to which a chain stay 301 is attached and the region 125F are not arranged on the line segment SL1. Thus, the rear/center length may be reduced. In the implementation shown in FIG. 13, the region in the bracket 125 to which the chain stay 301 is attached overlaps the line segment SL1 as viewed from a side of the vehicle; alternatively, the region may not overlap the line segment SL1.

The above embodiment describes a drive unit 20 in which the gear 2333 is provided on the driven member 2332 of the one-way clutch 233 and a resultant of a human-generated force (i.e. pedaling force) and a motor-generated drive force is output; alternatively, the present teaching may be applied to a drive unit in which, instead of using the gear 2333 provided on the driven member 2332, an auxiliary sprocket provided on the rotational shaft of the reduction gear 24 may be used to provide a motor drive force to a midway portion of the chain 36 wound around the driving and driven sprockets 34 and 32.

## Claims

1. An electric-motor-assisted bicycle comprising:
a front wheel (14F);
a rear wheel (14R) located rearward of the front wheel (14F) with respect to the bicycle;
a vehicle-body frame (12) for supporting the front and rear wheels (14F,14R); and
a drive unit (20) attached to the vehicle-body frame (12) for generating a driving force to be transmitted to the rear wheel (14R),
wherein the drive unit (20) includes:
a housing (21);
two attachment portions (216, 217) provided on an outer surface of the housing (21) for attaching the housing (21) to the vehicle-body frame (12), the two attachment portions (216, 217) being a first attachment portion (216) and a second attachment portion (217); and
a crank axle (22) extending through the housing (21) in a left/right direction with respect to the bicycle,
the vehicle-body frame (12) includes:
a bracket (125), the drive unit (20) being attached to the bracket (125); and
at least one chain stay (301) attached to the bracket (125) at a position rearward of the crank axle (22) as measured in a front/rear direction with respect to the bicycle, and extending from the bracket (125) rearwardly with respect to the bicycle for supporting an axle (141) of the rear wheel (14R),
wherein the housing (21) has an outlet (52), the outlet (52) opening upward with respect to the bicycle for allowing at least one cable (50) connected to a substrate (48) housed in the housing (21) to be routed out,
the electric-motor-assisted bicycle is provided with a battery unit (26) for supplying electric power to the drive unit (20), and
the battery unit (26) is located higher than the outlet (52),
the outlet (52) is located forward of the shaft center (22C) of the crank axle (22) and rearward of the first attachment portion (216) as measured in the front/rear direction with respect to the bicycle, wherein
the electric-motor-assisted bicycle further comprises:
that the first attachment portion (216) is located forward of the crank axle (22) as measured in the front/rear direction with respect to the bicycle,
the second attachment portion (217) is located rearward of the crank axle (22) as measured in the front/rear direction with respect to the bicycle, and
at least one of a region (125D) in the bracket (125) to which the chain stay (301) is attached and a region (125F) in the bracket (125) to which the second attachment portion (217) is attached does not overlap a line segment (SL1) connecting a shaft center (141C) of the axle (141) of the rear wheel (14R) to a shaft center (22C) of the crank axle (22) as viewed from a side of the bicycle, or
the electric-motor-assisted bicycle further comprises:
a saddle (18) located higher than the drive unit (20); and
a seatpost (29) for supporting the saddle (18), and
a seat tube (124) attached to the bracket (125), the seat tube (124) extending from the bracket (125) upwardly with respect to the bicycle, the seatpost (29) being inserted into the seat tube (124), wherein
the first attachment portion (216) is located forward of a position on the bracket (125) to which the seat tube (124) is attached as measured in a direction in which the bracket (125) extends as viewed from a side of the bicycle,
the second attachment portion (217) is located rearward of the position on the bracket (125) to which the seat tube (124) is attached as measured in the direction in which the bracket (125) extends as viewed from a side of the bicycle, and
a region (125D) in the bracket (125) to which the chain stay (301) is attached is different in position from a region (125F) in the bracket (125) to which the second attachment portion (217) is attached as measured in the direction in which the bracket (125) extends as viewed from a side of the bicycle.

2. An electric-motor-assisted bicycle according to claim 1, wherein the region (125F) in the bracket (125) to which the second attachment portion (217) is attached does not overlap the line segment (SL1) connecting a shaft center (141C) of the axle (141) of the rear wheel (14R) to a shaft center (22C) of the crank axle (22) as viewed from a side of the bicycle.

3. An electric-motor-assisted bicycle according to claim 1 or 2, wherein the drive unit (20) further includes: a motor (25) housed in the housing (21), and
the motor (25) is located forward of the crank axle (22) as viewed from a side of the bicycle.

4. An electric-motor-assisted bicycle according to claim 3, wherein the drive unit (20) further includes:
a crank-rotation input shaft (234), the crank axle (22) being inserted into the crank-rotation input shaft (234), the crank-rotation input shaft (234) having one end coupled to the crank axle (22);
a resultant-force output shaft (235), the crank axle (22) being inserted into the resultant-force output shaft (235), the resultant-force output shaft (235) being connected to the other end of the crank-rotation input shaft (234) by means of a one-way clutch (233) mechanism; and
a reduction gear (24) housed in the housing (21) for transmitting the driving force from the motor (25) to the resultant-force output shaft (235), and
a rotational center (RC3) of the reduction gear (24) is generally located lower than a straight line (L1) connecting the shaft center (22C) of the crank axle (22) to a rotational center (RC2) of a rotor (252) included in the motor (25) as viewed from a side of the bicycle.

5. An electric-motor-assisted bicycle according to any one of claims 1 to 4, further comprising:
a saddle (18); and
a seatpost (29) for supporting the saddle (18),
wherein the vehicle-body frame (12) further includes: a seat tube (124) attached to the bracket (125), the seat tube (124) extending from the bracket (125) upwardly with respect to the bicycle, the seatpost (29) being inserted into the seat tube (124),
the first attachment portion (216) is generally located forward of a reference line as viewed from a side of the bicycle, the reference line (L2) connecting the shaft center (22C) of the crank axle (22) to a center of an opening (OC1) on a top end of the seat tube (124) as viewed from a side of the bicycle, and
the second attachment portion (217) is generally located rearward of the reference line (L2) connecting the shaft center (22C) of the crank axle (22) to a center of an opening (OC1) on a top end of the seat tube (124) as viewed from a side of the bicycle.

6. An electric-motor-assisted bicycle according to claim 3, wherein the housing (21) includes a convex section overlapping a portion of the motor (25) as viewed from a side of the bicycle, and
the convex section of the housing (21) protrudes outwardly as measured in the left/right direction with respect to the bicycle such that a protrusion height as measured in the left/right direction with respect to the bicycle increases toward a rotational center (RC2) of a rotor (252) included in the motor (25).

7. An electric-motor-assisted bicycle according to claim 6, wherein the second attachment portion (217) includes at least one boss (217L, 217R) located outward of the convex section of the housing (21) as measured in a radial direction of the rotor (252) as viewed from a side of the bicycle, the boss (217L, 217R) protruding from the housing (21) in a left/right direction with respect to the bicycle, and
the housing (21) further includes a connecting portion (218) protruding from the housing (21) in a left/right direction with respect to the bicycle and extending in a direction perpendicular to an axis (CL2) of the rotor (252) providing its rotational center (RC2) to connect the convex section of the housing (21) to an outer surface of the boss (217L, 217R).

8. An electric-motor-assisted bicycle according to claim 3, wherein the drive unit (20) further includes:
a crank-rotation input shaft (234), the crank axle (22) being inserted into the crank-rotation input shaft (234), the crank-rotation input shaft (234) having one end coupled to the crank axle (22);
a resultant-force output shaft (235), the crank axle (22) being inserted into the resultant-force output shaft (235), the resultant-force output shaft (235) being connected to the other end of the crank-rotation input shaft (234) by means of a one-way clutch (233) mechanism; and
a reduction gear (24) housed in the housing (21) for transmitting the driving force from the motor (25) to the resultant-force output shaft (235),
the resultant-force output shaft (235) includes a driven gear (2333) for engaging a gear (241A) of the reduction gear (24), and
the housing (21) includes:
a first side portion (21C) overlapping a portion of the motor (25) as viewed from a side of the bicycle;
a second side portion (21B) overlapping a portion of the reduction gear (24) and
located outward of the first side portion (21C) as measured in the left/right direction with respect to the bicycle as viewed from a side of the bicycle; and
a third side portion (21A) overlapping a portion of the driven gear (2333) and located outward of the second side portion (21B) as measured in the left/right direction with respect to the bicycle as viewed from a side of the bicycle.

9. An electric-motor-assisted bicycle according to claim 3, wherein the drive unit (20) further includes:
a crank-rotation input shaft (234), the crank axle (22) being inserted into the crank-rotation input shaft (234), the crank-rotation input shaft (234) having one end coupled to the crank axle (22);
a resultant-force output shaft (235), the crank axle (22) being inserted into the resultant-force output shaft (235), the resultant-force output shaft (235) being connected to the other end of the crank-rotation input shaft (234) by means of a one-way clutch (233) mechanism; and
a reduction gear (24) housed in the housing (21) for transmitting the driving force from the motor (25) to the resultant-force output shaft (235),
the resultant-force output shaft (235) includes a driven gear (2333) for engaging the reduction gear (24),
the housing (21) includes a convex section overlapping a portion of the driven gear (2333) as viewed from a side of the bicycle, and
the convex section of the housing (21) protrudes outwardly as measured in the left/right direction with respect to the bicycle such that a protrusion height as measured in the left/right direction with respect to the bicycle increases toward a rotational center of the crank axle (22).

## Patentansprüche

1. Ein Elektro-Motor-Unterstütztes-Fahrrad, das umfasst:
ein Vorder-Rad (14F);
ein Hinter-Rad (14R), das sich in Bezug auf das Fahrrad hinter dem Vorder-Rad (14F) befindet;
einem Fahrzeug-Körper-Rahmen (12) zur Lagerung der Vorder- und Hinter-Räder (14F, 14R); und
eine Antriebs-Einheit (20), die an dem Fahrzeug-Körper-Rahmen (12) angebracht ist, um eine Antriebs-Kraft zu erzeugen, die auf das Hinter-Rad (14R) zu übertragen ist,
wobei die Antriebs-Einheit (20) beinhaltet:
ein Gehäuse (21);
zwei Anbringungs-Abschnitte (216, 217), die an einer Außen-Fläche des Gehäuses (21) vorgesehen sind, um das Gehäuse (21) an dem Fahrzeug-Körper-Rahmen (12) anzubringen, die zwei Anbringungs-Abschnitte (216, 217) sind ein erster Anbringungs-Abschnitt (216) und ein zweiter Anbringungs-Abschnitt (217); und
eine Kurbel-Achse (22), die sich durch das Gehäuse (21) in einer Links/Rechts-Richtung in Bezug auf das Fahrrad erstreckt,
der Fahrzeug-Körper-Rahmen (12) beinhaltet:
eine Klammer (125), die Antriebs-Einheit (20), die an der Klammer (125) angebracht ist; und
zumindest eine Ketten-Strebe (301), die an der Klammer (125) angebracht ist, an einer Position hinter der Kurbel-Achse (22), gemessen in einer Vorwärts-/RückwärtsRichtung in Bezug auf das Fahrrad, und sich von der Klammer (125) in Bezug auf das Fahrrad nach hinten erstreckt, um eine Achse (141) des Hinter-Rads (14R) zu lagern,
wobei das Gehäuse (21) einen Auslass (52) hat, der Auslass (52) sich in Bezug auf das Fahrrad nach oben öffnet, um ein Herausführen von zumindest einem Kabel (50) zu ermöglichen, das mit einem Substrat (48), das in dem Gehäuse (21) untergebracht ist, verbunden ist,
das Elektro-Motor-Unterstützte-Fahrrad mit einer Batterie-Einheit (26) zur Versorgung der Antriebs-Einheit (20) mit elektrischer Energie vorgesehen ist, und
die Batterie-Einheit (26) höher als der Ausgang (52) angeordnet ist,
der Auslass (52) vor der Wellen-Zentrum (22C) der Kurbel-Achse (22) und hinter dem ersten Anbringungs-Abschnitt (216), gemessen in der Vorwärts/Rückwärts-Richtung in Bezug auf das Fahrrad, angeordnet ist, wobei
das Elektro-Motor-Unterstützte-Fahrrad weiter umfasst:
dass der erste Anbringungs-Abschnitt (216) vor der Kurbel-Achse (22) angeordnet ist, gemessen in Vorwärts-/Rückwärts-Richtung in Bezug auf das Fahrrad,
der zweite Anbringungs-Abschnitt (217) hinter der Kurbel-Achse (22) angeordnet ist, gemessen in Vorwärts-/Rückwärts-Richtung in Bezug auf das Fahrrad, und
zumindest ein Bereich (125D) in der Klammer (125), an dem die Ketten-Strebe (301) angebracht ist und ein Bereich (125F) in der Klammer (125), an dem der zweite Anbringungs-Abschnitt (217) angebracht ist, ein Linien-Segment (SL1), das einen Wellen-Zentrum (141C) der Achse (141) des Hinter-Rads (14R) mit einem Wellen-Zentrum (22C) der Kurbel-Achse (22) verbindet, von einer Seite des Fahrrads aus gesehen, nicht überlappt, oder
das Elektro-Motor-Unterstützte-Fahrrad weiter umfasst:
einem Sattel (18), der höher als die Antriebs-Einheit (20) angeordnet ist; und
eine Sattel-Stütze (29) zum Lagern des Sattels (18), und
ein Sattel-Rohr (124), das an der Klammer (125) angebracht ist, das Sattel-Rohr (124) erstreckt sich von der Klammer (125) in Bezug auf das Fahrrad nach oben, die Sattel-Stütze (29) ist in das Sattel-Rohr (124) eingesetzt, wobei
der erste Anbringungs-Abschnitt (216) vor einer Position an der Klammer (125) angeordnet ist, an der das Sattel-Rohr (124) angebracht ist, gemessen in einer Richtung, in der sich die Klammer (125), von einer Seite des Fahrrads aus gesehen, erstreckt,
der zweite Anbringungs-Abschnitt (217) hinter der Position an der Klammer (125) angeordnet ist, an der das Sattel-Rohr (124) angebracht ist, gemessen in der Richtung, in der sich die Klammer (125), von einer Seite des Fahrrads aus gesehen, erstreckt, und
ein Bereich (125D) in der Klammer (125), an dem die Ketten-Strebe (301) angebracht ist, sich in seiner Position von einem Bereich (125F) in der Klammer (125) unterscheidet, an dem der zweite Anbringungs-Abschnitt (217) angebracht ist, gemessen in der Richtung, in der sich die Klammer (125), von einer Seite des Fahrrads aus gesehen, erstreckt.

2. Ein Elektro-Motor-Unterstütztes-Fahrrad gemäß Anspruch 1, wobei der Bereich (125F) in der Klammer (125), an dem der zweite Anbringungs-Abschnitt (217) angebracht ist, das Linien-Segment (SL1), das einen Wellen-Zentrum (141C) der Achse (141) des HinterRades (14R) mit einem Wellen-Zentrum (22C) der Kurbel-Achse (22) verbindet, von einer Seite des Fahrrades aus gesehen, nicht überlappt.

3. Ein Elektro-Motor-Unterstütztes-Fahrrad gemäß Anspruch 1 oder 2, wobei die Antriebs-Einheit (20) weiter umfasst: einen Motor (25), der in dem Gehäuse (21) untergebracht ist, und
der Motor (25) vor der Kurbel-Achse (22) angeordnet ist, wenn von einer Seite des Fahrrads aus gesehen.

4. Ein Elektro-Motor-Unterstütztes-Fahrrad gemäß Anspruch 3, wobei die Antriebs-Einheit (20) weiter umfasst:
eine Kurbel-Rotations-Eingangs-Welle (234), die Kurbel-Achse (22) ist in die Kurbel-Rotations-Eingangs-Welle (234) eingesetzt, die Kurbel-Rotations-Eingangs-Welle (234) hat ein Ende, das mit der Kurbel-Achse (22) gekoppelt ist;
eine Resultierend-Kraft-Ausgangs-Welle (235), die Kurbel-Achse (22) ist in die Resultierend-Kraft-Ausgangs-Welle (235) eingesetzt, die Resultierend-Kraft-Ausgangs-Welle (235) ist mit dem anderen Ende der Kurbel-Rotations-Eingangs-Welle (234) durch einen Einweg-Kupplungs-Mechanismus (233) verbunden; und
ein Untersetzungs-Getriebe (24), das in dem Gehäuse (21) untergebracht ist, zur Übertragung der Antriebs-Kraft von dem Motor (25) auf die Resultierend-Kraft-Ausgangs-Welle (235), und
ein Dreh-Zentrum (RC3) des Untersetzungs-Getriebes (24) im Allgemeinen niedriger als eine gerade Linie (L1) angeordnet ist, die das Wellen-Zentrum (22C) der Kurbel-Achse (22) mit einem Dreh-Zentrum (RC2) eines Rotors (252) verbindet, der in dem Motor (25) enthalten ist, wenn von einer Seite des Fahrrads aus gesehen.

5. Ein Elektro-Motor-Unterstütztes-Fahrrad gemäß einem der Ansprüche 1 bis 4, das weiter umfasst
einen Sattel (18); und
eine Sattel-Stütze (29) zum Lagern des Sattels (18),
wobei der Fahrzeug-Körper-Rahmen (12) weiter umfasst: ein Sattel-Rohr (124), das an der Klammer (125) angebracht ist, das Sattel-Rohr (124) erstreckt sich von der Klammer (125) in Bezug auf das Fahrrad nach oben, die Sattel-Stütze (29) ist in das Sattel-Rohr (124) eingesetzt,
der erste Anbringungs-Abschnitt (216) ist im Allgemeinen vor einer Referenz-Linie angeordnet, von einer Seite des Fahrrads aus gesehen, die Referenz-Linie (L2) verbindet das Wellen-Zentrum (22C) der Kurbel-Achse (22) mit einer Mitte einer Öffnung (OC1) an einem oberen Ende des Sattel-Rohrs (124), wenn von einer Seite des Fahrrads aus gesehen, und
der zweite Anbringungs-Abschnitt (217) ist im Allgemeinen hinter der Referenz-Linie (L2) angeordnet, die das Wellen-Zentrum (22C) der Kurbel-Achse (22) mit einer Mitte einer Öffnung (OC1) an einem oberen Ende des Sattel-Rohrs (124) verbindet, wenn von einer Seite des Fahrrads aus gesehen.

6. Ein Elektro-Motor-Unterstütztes-Fahrrad gemäß Anspruch 3, wobei das Gehäuse (21) einen konvexen Abschnitt beinhaltet, der einen Abschnitt des Motors (25), von einer Seite des Fahrrads aus gesehen, überlappt, und
der konvexe Abschnitt des Gehäuses (21), gemessen in der Links/Rechts-Richtung in Bezug auf das Fahrrad, nach außen vorsteht, so dass eine Vorstehhöhe, gemessen in der Links/Rechts-Richtung in Bezug auf das Fahrrad, in Richtung eines Rotations-Zentrums (RC2) eines Rotors (252), der in dem Motor (25) beinhaltet ist, zunimmt.

7. Ein Elektro-Motor-Unterstütztes-Fahrrad gemäß Anspruch 6, wobei der zweite Anbringungs-Abschnitt (217) zumindest einen Ansatz (217L, 217R) beinhaltet, der außerhalb des konvexen Abschnitts des Gehäuses (21), gemessen in einer radialen Richtung des Rotors (252), von einer Seite des Fahrrads aus gesehen, angeordnet ist, der Ansatz (217L, 217R) steht von dem Gehäuse (21) in einer Links/Rechts-Richtung in Bezug auf das Fahrrad vor, und
das Gehäuse (21) beinhaltet weiterhin einen Verbindungs-Abschnitt (218), der von dem Gehäuse (21) in einer Links/Rechts-Richtung in Bezug auf das Fahrrad vorsteht und sich in einer Richtung senkrecht zu einer Achse (CL2) des Rotors (252) erstreckt, der sein Dreh-Zentrum (RC2) bereitstellt, um den konvexen Abschnitt des Gehäuses (21) mit einer Außen-Fläche des Ansatz (217L, 217R) zu verbinden.

8. Ein Elektro-Motor-Unterstütztes-Fahrrad gemäß Anspruch 3, wobei die Antriebs-Einheit (20) weiter umfasst:
eine Kurbel-Rotations-Eingangs-Welle (234), die Kurbel-Achse (22) ist in die Kurbel-Rotations-Eingangs-Welle (234) eingesetzt, die Kurbel-Rotations-Eingangs-Welle (234) hat einem Ende, das mit der Kurbel-Achse (22) verbunden ist;
eine Resultierend-Kraft-Ausgangs-Welle (235), die Kurbel-Achse (22) ist in die Resultierend-Kraft-Ausgangs-Welle (235) eingesetzt, die Resultierend-Kraft-Ausgangs-Welle (235) ist mit dem anderen Ende der Kurbel-Rotations-Eingangs-Welle (234) durch einen Einweg-Kupplungs-Mechanismus (233) verbunden; und
ein Untersetzungs-Getriebe (24), das in dem Gehäuse (21) untergebracht ist, zur Übertragung der Antriebs-Kraft von dem Motor (25) auf die Resultierend-Kraft-Ausgangs-Welle (235),
die Resultierend-Kraft-Ausgangs-Welle (235) beinhaltet ein angetriebenes Zahnrad (2333) zum Eingriff in ein Zahnrad (241A) des Untersetzungs-Getriebes (24), und
das Gehäuse (21) umfasst:
einem ersten Seiten-Abschnitt (21C), der einen Abschnitt des Motors (25) überlappt, wenn von einer Seite des Fahrrads aus gesehen;
einen zweiten Seiten-Abschnitt (21B), der einen Abschnitt des Untersetzungs-Getriebes (24) überlappt und sich außerhalb des ersten Seiten-Abschnitts (21C) befindet, gemessen in der Links-/Rechts-Richtung in Bezug auf das Fahrrad, von einer Seite des Fahrrads aus gesehen; und
ein dritter Seiten-Abschnitt (21A), der einen Abschnitt des angetriebenen Zahnrads (2333) überlappt und sich außerhalb des zweiten Seiten-Abschnitts (21B) befindet, gemessen in Links-/Rechts-Richtung in Bezug auf das Fahrrad, von einer Seite des Fahrrads aus gesehen.

9. Ein Elektro-Motor-Unterstütztes-Fahrrad gemäß Anspruch 3, wobei die Antriebs-Einheit (20) weiter umfasst:
eine Kurbel-Rotations-Eingangs-Welle (234), die Kurbel-Achse (22) ist in die Kurbel-Rotations-Eingangs-Welle (234) eingesetzt ist, die Kurbel-Rotations-Eingangs-Welle (234) hat ein Ende, das mit der Kurbel-Achse (22) verbunden ist;
eine Resultierend-Kraft-Ausgangs-Welle (235), die Kurbel-Achse (22) ist in die Resultierend-Kraft-Ausgangs-Welle (235) eingesetzt, die Resultierend-Kraft-Ausgangs-Welle (235) ist mit dem anderen Ende der Kurbel-Rotations-Eingangs-Welle (234) durch einen Einweg-Kupplungs-Mechanismus (233) verbunden; und
ein Untersetzungs-Getriebe (24), das in dem Gehäuse (21) untergebracht ist, zur Übertragung der Antriebs-Kraft von dem Motor (25) auf die Resultierend-Kraft-Ausgangs-Welle (235),
die Resultierend-Kraft-Ausgangs-Welle (235) beinhaltet ein angetriebenes Zahnrad (2333) zum Eingriff mit dem Untersetzungs-Getriebe (24),
das Gehäuse (21) beinhaltet einen konvexen Abschnitt, der einen Abschnitt des angetriebenen Zahnrads (2333) überlappt, wenn von einer Seite des Fahrrads aus gesehen, und
der konvexe Abschnitt des Gehäuses (21) nach außen vorsteht, gemessen in der Links/Rechts-Richtung in Bezug auf das Fahrrad, so dass eine Vorstehhöhe, gemessen in der Links/Rechts-Richtung in Bezug auf das Fahrrad, zu einem Rotations-Zentrum der Kurbel-Achse (22) hin zunimmt.

## Revendications

1. Bicyclette assistée par un moteur électrique comprenant :
une roue avant (14F) ;
une roue arrière (14R) située à l'arrière de la roue avant (14F) par rapport à la bicyclette ;
un châssis de corps de véhicule (12) pour supporter les roues avant et arrière (14F, 14R) ; et
une unité d'entraînement (20) attachée au châssis de corps de véhicule (12) pour générer une force d'entraînement à transmettre à la roue arrière (14R),
dans laquelle l'unité d'entraînement (20) comprend :
un boîtier (21) ;
deux portions d'attachement (216, 217) pourvues sur une surface externe du boîtier (21) pour attacher le boîtier (21) au châssis de corps de véhicule (12), les deux portions d'attachement (216, 217) étant une première portion d'attachement (216) et une deuxième portion d'attachement (217) ; et
un axe de pédalier (22) qui s'étend à travers le boîtier (21) en direction gauche-droite de la bicyclette,
le châssis de corps de véhicule (12) comprenant :
un boîtier de pédalier (125) auquel l'unité d'entraînement (20) est attachée ; et
au moins une base de fourche arrière (301) attachée au boîtier de pédalier (125) à une position à l'arrière de l'axe de pédalier (22) tel que mesuré en direction avant-arrière de la bicyclette, et s'étendant du boîtier de pédalier (125) vers l'arrière par rapport à la bicyclette pour supporter un essieu (141) de la roue arrière (14R),
dans laquelle le boîtier (21) comporte une prise électrique (52), la prise électrique (52) s'ouvrant vers le haut par rapport à la bicyclette pour permettre le routage vers l'extérieur d'au moins un câble (50) connecté à un substrat (48) logé dans le boîtier (21),
la bicyclette assistée par un moteur électrique est pourvue d'une unité de batterie (26) pour alimenter de l'énergie électrique à l'unité d'entraînement (20), et
l'unité de batterie (26) est située plus haut que la prise électrique (52),
la prise électrique (52) est située à l'avant du centre d'axe (22C) de l'axe de pédalier (22) et à l'arrière de la première portion d'attachement (216) tel que mesuré en direction avant-arrière de la bicyclette, dans laquelle
dans laquelle en outre, sur la bicyclette assistée par un moteur électrique :
la première portion d'attachement (216) est située à l'avant de l'axe de pédalier (22) tel que mesuré en direction avant-arrière de la bicyclette,
la deuxième portion d'attachement (217) est située à l'arrière de l'axe de pédalier (22) tel que mesuré en direction avant-arrière de la bicyclette, et
au moins une région, parmi une région (125D) dans le boîtier de pédalier (125) où la base de fourche arrière (301) est attachée et une région (125F) dans le boîtier de pédalier (125) où la deuxième portion d'attachement (217) est attachée, ne chevauche pas un segment de ligne (SL1) qui connecte le centre d'axe (141C) de l'essieu (141) de la roue arrière (14R) au centre d'axe (22C) de l'axe de pédalier (22) en vue latérale de la bicyclette, ou
la bicyclette assistée par un moteur électrique comprend en outre :
une selle (18) située plus haut que l'unité d'entraînement (20) ; et
une tige de selle (29) pour supporter la selle (18), et un tube de selle (124) attaché au boîtier de pédalier (125), le tube de selle (124) s'étendant depuis le boîtier de pédalier (125) vers le haut par rapport à la bicyclette, la tige de selle (29) étant insérée dans le tube de selle (124), dans laquelle
la première portion d'attachement (216) est située à l'avant d'une position sur le boîtier de pédalier (125) où le tube de selle (124) est attaché tel que mesuré dans la direction dans laquelle le boîtier de pédalier (125) s'étend en vue latérale de la bicyclette,
la deuxième portion d'attachement (217) est située à l'arrière de la position sur le boîtier de pédalier (125) où le tube de selle (124) est attaché tel que mesuré dans la direction dans laquelle le boîtier de pédalier (125) s'étend en vue latérale de la bicyclette, et
une région (125D) dans le boîtier de pédalier (125) où la base de fourche arrière (301) est attachée est différente en position d'une région (125F) dans le boîtier de pédalier (125) où la deuxième portion d'attachement (217) est attachée tel que mesuré dans la direction dans laquelle le boîtier de pédalier (125) s'étend en vue latérale de la bicyclette.

2. Bicyclette assistée par un moteur électrique selon la revendication 1, dans laquelle la région (125F) dans le boîtier de pédalier (125) où la deuxième portion d'attachement (217) est attachée ne chevauche pas le segment de ligne (SL1) qui connecte un centre d'axe (141C) de l'essieu (141) de la roue arrière (14R) à un centre d'axe (22C) de l'axe de pédalier (22) en vue latérale de la bicyclette.

3. Bicyclette assistée par un moteur électrique selon la revendication 1 ou 2, dans laquelle
l'unité d'entraînement (20) comprend en outre un moteur (25) logé dans le boîtier (21), et
le moteur (25) est situé à l'avant de l'axe de pédalier (22) en vue latérale de la bicyclette.

4. Bicyclette assistée par un moteur électrique selon la revendication 3, dans laquelle l'unité d'entraînement (20) comprend en outre :
un axe d'entrée de rotation de pédalier (234), l'axe de pédalier (22) étant inséré dans l'axe d'entrée de rotation de pédalier (234), l'axe d'entrée de rotation de pédalier (234) ayant une extrémité couplée à l'axe de pédalier (22) ;
un axe de sortie de force résultante (235), l'axe de pédalier (22) étant inséré dans l'axe de sortie de force résultante (235), l'axe de sortie de force résultante (235) étant connecté à l'autre extrémité de l'axe d'entrée de rotation de pédalier (234) à l'aide d'un mécanisme d'embrayage unidirectionnel (233) ; et
un engrenage de réduction (24) logé dans le boîtier (21) pour transmettre la force d'entraînement du moteur (25) à l'axe de sortie de force résultante (235), et
un centre de rotation (RC3) de l'engrenage de réduction (24) est généralement situé plus bas qu'une ligne droite (L1) qui connecte le centre d'axe (22C) de l'axe de pédalier (22) à un centre de rotation (RC2) d'un rotor (252) inclus dans le moteur (25) en vue latérale de la bicyclette.

5. Bicyclette assistée par un moteur électrique selon l'une quelconque des revendications 1 à 4, comprenant en outre :
une selle (18) ; et
une tige de selle (29) pour supporter la selle (18),
dans laquelle le châssis de corps de véhicule (12) comprend en outre : un tube de selle (124) attaché au boîtier de pédalier (125), le tube de selle (124) s'étendant depuis le boîtier de pédalier (125) vers le haut par rapport à la bicyclette, la tige de selle (29) étant insérée dans le tube de selle (124),
la première portion d'attachement (216) est généralement située à l'avant d'une ligne de référence en vue latérale de la bicyclette, la ligne de référence (L2) connectant le centre d'axe (22C) de l'axe de pédalier (22) au centre d'une ouverture (OC1) à l'extrémité supérieure du tube de selle (124) en vue latérale de la bicyclette, et
la deuxième portion d'attachement (217) est généralement située à l'arrière de la ligne de référence (L2) connectant le centre d'axe (22C) de l'axe de pédalier (22) au centre d'une ouverture (OC1) à l'extrémité supérieure du tube de selle (124) en vue latérale de la bicyclette.

6. Bicyclette assistée par un moteur électrique selon la revendication 3, dans laquelle le boîtier (21) comprend une section convexe qui chevauche une portion du moteur (25) en vue latérale de la bicyclette, et
la section convexe du boîtier (21) ressort vers l'extérieur tel que mesuré en direction gauche-droite de la bicyclette de telle sorte que la hauteur de protubérance telle que mesurée en direction gauche-droite de la bicyclette augmente vers le centre de rotation (RC2) d'un rotor (252) inclus dans le moteur (25).

7. Bicyclette assistée par un moteur électrique selon la revendication 6, dans laquelle la deuxième portion d'attachement (217) comprend au moins un bossage (217L, 217R) situé à l'extérieur de la section convexe du boîtier (21) tel que mesuré en direction radiale du rotor (252) en vue latérale de la bicyclette, le bossage (217L, 217R) ressortant du boîtier (21) en direction gauche-droite de la bicyclette, et
le boîtier (21) comprend en outre une portion de connexion (218) qui ressort du boîtier (21) en direction gauche-droite de la bicyclette et s'étend dans une direction perpendiculaire à un axe (CL2) du rotor (252) qui procure son centre de rotation (RC2) pour connecter la section convexe du boîtier (21) à une surface externe du bossage (217L, 217R).

8. Bicyclette assistée par un moteur électrique selon la revendication 3, dans laquelle l'unité d'entraînement (20) comprend en outre :
un axe d'entrée de rotation de pédalier (234), l'axe de pédalier (22) étant inséré dans l'axe d'entrée de rotation de pédalier (234), l'axe d'entrée de rotation de pédalier (234) ayant une extrémité couplée à l'axe de pédalier (22) ;
un axe de sortie de force résultante (235), l'axe de pédalier (22) étant inséré dans l'axe de sortie de force résultante (235), l'axe de sortie de force résultante (235) étant connecté à l'autre extrémité de l'axe d'entrée de rotation de pédalier (234) à l'aide d'un mécanisme d'embrayage unidirectionnel (233) ; et
un engrenage de réduction (24) logé dans le boîtier (21) pour transmettre la force d'entraînement du moteur (25) à l'axe de sortie de force résultante (235),
l'axe de sortie de force résultante (235) comprenant un engrenage entraîné (2333) pour s'engager avec un engrenage (241A) de l'engrenage de réduction (24), et
le boîtier (21) comprenant :
une première portion latérale (21C) qui chevauche une portion du moteur (25) en vue latérale de la bicyclette ;
une deuxième portion latérale (21B) qui chevauche une portion de l'engrenage de réduction (24) et située à l'extérieur de la première portion latérale (21C) tel que mesuré en direction gauche-droite de la bicyclette en vue latérale de la bicyclette ; et
une troisième portion latérale (21A) qui chevauche une portion de l'engrenage entraîné (2333) et située à l'extérieur de la deuxième portion latérale (21B) tel que mesuré en direction gauche-droite de la bicyclette en vue latérale de la bicyclette.

9. Bicyclette assistée par un moteur électrique selon la revendication 3, dans laquelle l'unité d'entraînement (20) comprend en outre :
un axe d'entrée de rotation de pédalier (234), l'axe de pédalier (22) étant inséré dans l'axe d'entrée de rotation de pédalier (234), l'axe d'entrée de rotation de pédalier (234) ayant une extrémité couplée à l'axe de pédalier (22) ;
un axe de sortie de force résultante (235), l'axe de pédalier (22) étant inséré dans l'axe de sortie de force résultante (235), l'axe de sortie de force résultante (235) étant connecté à l'autre extrémité de l'axe d'entrée de rotation de pédalier (234) à l'aide d'un mécanisme d'embrayage unidirectionnel (233) ; et
un engrenage de réduction (24) logé dans le boîtier (21) pour transmettre la force d'entraînement du moteur (25) à l'axe de sortie de force résultante (235),
l'axe de sortie de force résultante (235) comprenant un engrenage entraîné (2333) pour s'engager avec l'engrenage de réduction (24),
le boîtier (21) comprenant une section convexe qui chevauche une portion de l'engrenage entraîné (2333) en vue latérale de la bicyclette, et
la section convexe du boîtier (21) ressortant vers l'extérieur tel que mesuré en direction gauche-droite de la bicyclette de telle sorte que la hauteur de protubérance telle que mesurée en direction gauche-droite de la bicyclette augmente vers le centre de rotation de l'axe de pédalier (22).
